(19) Europäisches Patentamt
European Patent Office
Office européen des brevets

(11) EP 4 556 528 A1

(12) **EUROPEAN PATENT APPLICATION**
published in accordance with Art. 153(4) EPC

(43) Date of publication:
**21.05.2025 Bulletin 2025/21**

(21) Application number: **23839300.3**

(22) Date of filing: **19.05.2023**

(51) International Patent Classification (IPC):
***C08L 79/08*** *(2006.01)* ***B32B 15/088*** *(2006.01)*
***B33Y 70/00*** *(2020.01)* ***C08G 73/10*** *(2006.01)*
***C08L 101/00*** *(2006.01)* ***C09J 7/35*** *(2018.01)*
***C09J 171/00*** *(2006.01)* ***C09J 179/04*** *(2006.01)*

(52) Cooperative Patent Classification (CPC):
**B32B 15/088; B33Y 70/00; C08G 73/10; C08L 79/08; C08L 101/00; C09J 7/35; C09J 171/00; C09J 179/04**

(86) International application number:
**PCT/JP2023/018691**

(87) International publication number:
**WO 2024/014123 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.07.2022 JP 2022112706**

(71) Applicant: **MITSUBISHI GAS CHEMICAL COMPANY, INC.**
**Chiyoda-ku**
**Tokyo 100-8324 (JP)**

(72) Inventors:
- **SAKAI Atsushi**
  **Hiratsuka-shi, Kanagawa 254-0016 (JP)**
- **FUJII Ryosuke**
  **Hiratsuka-shi, Kanagawa 254-0016 (JP)**
- **SATO Yuuki**
  **Hiratsuka-shi, Kanagawa 254-0016 (JP)**
- **KANEKO Naoki**
  **Hiratsuka-shi, Kanagawa 254-0016 (JP)**

(74) Representative: **Vossius & Partner Patentanwälte Rechtsanwälte mbB**
**Siebertstrasse 3**
**81675 München (DE)**

# (54) THERMOPLASTIC RESIN COMPOSITION, MOLDED PRODUCT, METAL FOIL LAMINATED BOARD, BONDING SHEET, FILAMENT, AND MATERIAL FOR THREE-DIMENSIONAL FABRICATION

(57) A thermoplastic resin composition containing a crystalline thermoplastic polyimide resin (A) and a polyether ketone ketone resin (B), the crystalline thermoplastic polyimide resin (A) containing a repeating structural unit represented by the following formula (1) and a repeating structural unit represented by the following formula (2), a content ratio of the repeating structural unit of formula (1) with respect to the total of the repeating structural unit of formula (1) and the repeating structural unit of formula (2) being 15 to 70 mol%, wherein
an absolute value of a difference between a melting point $Tm_A$ of the component (A) and a melting point $Tm_B$ of the component (B), $|Tm_A-Tm_B|$, is 0 to 40°C.

EP 4 556 528 A1

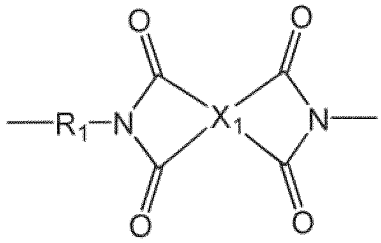

(1)

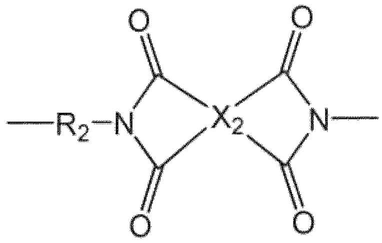

(2)

wherein $R_1$ represents a divalent group having from 6 to 22 carbon atoms containing at least one alicyclic hydrocarbon structure; $R_2$ represents a divalent chain aliphatic group having from 5 to 16 carbon atoms; and $X_1$ and $X_2$ each independently represent a tetravalent group having from 6 to 22 carbon atoms containing at least one aromatic ring.

## Description

### Technical Field

The present invention relates to a thermoplastic resin composition, a molded article, a metal foil laminate, a bonding sheet, a filament, and a three-dimensional fabrication material.

### Background Art

A polyimide resin is a useful engineering plastic that has high thermal stability, high strength and high solvent resistance due to the stiffness, resonance stabilization and strong chemical bonds of the molecular chain thereof, and is being applied to a wide range of fields. A polyimide resin having crystallinity can be further enhanced in the heat resistance, the strength and the chemical resistance thereof, and thus is expected for applications as alternatives of metals or the like. While a polyimide resin has high heat resistance, however, it has the problems of exhibiting no thermoplasticity and having low molding processability.

Thus, a polyimide resin having thermoplasticity has been reported in recent years. Such a thermoplastic polyimide resin is excellent in molding processability in addition to the original heat resistance of the polyimide resin. The thermoplastic polyimide resin is therefore applicable to a molded article for use in an inhospitable environment to which nylon or polyester, a general purpose thermoplastic resin, is inapplicable.

For example, Patent Literature 1 discloses a thermoplastic polyimide resin containing a predetermined repeating structural unit obtained by reacting a tetracarboxylic acid and/or derivative thereof containing at least one aromatic ring, a diamine containing at least one alicyclic hydrocarbon structure, and a chain aliphatic diamine.

In the engineering plastics field, a technique of compounding and alloying two or more thermoplastic resins is also known for the purpose of improving physical properties, imparting functions according to the application, and the like. Patent Literature 2 discloses a thermoplastic polyimide resin containing a predetermined repeating unit, and also describes that this polyimide resin is used as a polymer alloy in combination with other resins.

Patent Literature 3 discloses that a resin molded article containing a polyimide resin that is combined with a specific different polyimide structural unit in a specific ratio and that has a weight average molecular weight in a specific range and a polyether ketone-based resin has a high heat deformation temperature under a low load environment and excellent heat resistance.

### Citation List

#### Patent Literature

PTL 1: WO 2013/118704

PTL 2: WO 2016/147996

PTL 3: WO 2019/220969

### Summary of Invention

#### Technical Problem

The polyimide resins described in Patent Literature 1 to Patent Literature 3 are all crystalline thermoplastic resins.

In recent years, three-dimensional fabrication technology using 3D printers and the like is being researched. General molding methods include powder sintering lamination in which a 3D printer molding material containing a sinterable component and a binder component is laminated into a desired shape using a 3D printer, and then sintered and molded to produce a molded article, and thermal fusion lamination in which a resin that has been melted by heat is discharged from a nozzle and stacked one layer at a time.

In powder sintering lamination, a thermoplastic resin can be used as a binder component, but if a crystalline thermoplastic resin with an excessively high crystallization temperature is used, it is difficult for the laminated 3D printer molding materials to adhere to each other, and molding defects may occur due to the occurrence of sink marks due to the difference in temperature during lamination.

An object of the present invention is to provide a thermoplastic resin composition that contains a crystalline

thermoplastic resin and that can have a lower crystallization temperature than the crystalline thermoplastic resin while maintaining heat resistance and crystallinity.

Solution to Problem

The present inventors have found that the aforementioned object can be attained by a thermoplastic resin composition containing two specific types of crystalline thermoplastic resins having a melting point difference within a specific range.

That is, the present invention relates to the following.

[1] A thermoplastic resin composition containing a crystalline thermoplastic polyimide resin (A) and a polyether ketone ketone resin (B), the crystalline thermoplastic polyimide resin (A) containing a repeating structural unit represented by the following formula (1) and a repeating structural unit represented by the following formula (2), a content ratio of the repeating structural unit of formula (1) with respect to the total of the repeating structural unit of formula (1) and the repeating structural unit of formula (2) being 15 to 70 mol%, wherein
an absolute value of a difference between a melting point $Tm_A$ of the component (A) and a melting point $Tm_B$ of the component (B), $|Tm_A-Tm_B|$, is 0 to 40°C,

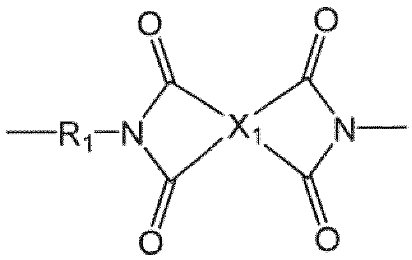

(1)

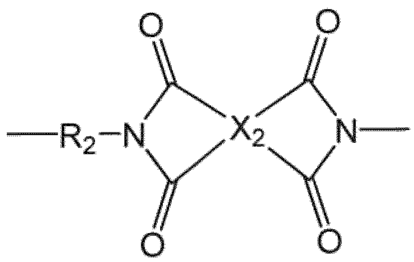

(2)

wherein $R_1$ represents a divalent group having from 6 to 22 carbon atoms containing at least one alicyclic hydrocarbon structure; $R_2$ represents a divalent chain aliphatic group having from 5 to 16 carbon atoms; and $X_1$ and $X_2$ each independently represent a tetravalent group having from 6 to 22 carbon atoms containing at least one aromatic ring.

[2] The thermoplastic resin composition according to the above [1], wherein the melting point $Tm_A$ of the component (A) and the melting point $Tm_B$ of the component (B) are both in a range of 270 to 360°C.

[3] The thermoplastic resin composition according to the above [1] or [2], wherein a mass ratio of the component (A) to the component (B) in the thermoplastic resin composition is 1/99 to 80/20.

[4] The thermoplastic resin composition according to any one of the above [1] to [3], wherein a total content of the component (A) and the component (B) in the thermoplastic resin composition is 50% by mass or more.

[5] The thermoplastic resin composition according to any one of the above [1] to [4], wherein the thermoplastic resin composition has a heat of crystallization of 10 mJ/mg or more.

[6] The thermoplastic resin composition according to any one of the above [1] to [5], wherein the thermoplastic resin composition has a melting point Tm, and a difference (Tm-Tc) between the melting point Tm and a crystallization temperature Tc of the thermoplastic resin composition is 65°C or more.

[7] The thermoplastic resin composition according to the above [6], wherein (Tm-Tc) is 80°C or more.

[8] The thermoplastic resin composition according to any one of the above [1] to [7], wherein the thermoplastic resin composition has a lamellar microphase-separated structure.

[9] The thermoplastic resin composition according to any one of the above [1] to [8], further containing a filler.

[10] A molded article containing the thermoplastic resin composition according to any one of the above [1] to [9].

[11] A metal foil laminate including a layer composed of the molded article according to the above [10] and a layer composed of a metal foil.

[12] A bonding sheet containing the thermoplastic resin composition according to any one of the above [1] to [9].

[13] A filament containing the thermoplastic resin composition according to any one of the above [1] to [9].

[14] A three-dimensional fabrication material containing the thermoplastic resin composition according to any one of the above [1] to [9].

## Advantageous Effects of Invention

The thermoplastic resin composition of the present invention has heat resistance and crystallinity, suppresses an increase in crystallization temperature, has good thermoformability, and is less likely to cause a decrease in adhesion or to cause sink marks during three-dimensional modeling, and thus is suitable as a molding material for 3D printers, for example. Further, the thermoplastic resin composition of the present invention exerts good adhesion to an adherend due to the effect of reducing the crystallization temperature and has high heat resistance, so the thermoplastic resin composition is also suitable to use for a metal foil laminate such as a bonding sheet or a copper clad laminate.

## Brief Description of Drawings

[Fig. 1] Fig. 1 is a schematic diagram showing a production method of a sample (ultra-thin piece) used in observation by a field-emission scanning transmission electron microscope (FE-STEM).
[Fig. 2] Fig. 2 is a micrograph of a cross-section of the thermoplastic resin composition (pellets) of Example 3, cut in a direction perpendicular to the machine direction (MD), observed by FE-STEM.
[Fig. 3] Fig. 3 is a micrograph of a cross-section of the injection-molded article obtained in Example 3, cut in a direction perpendicular to the machine direction (MD), observed by FE-STEM.
[Fig. 4] Fig. 4 is a schematic diagram for illustrating a method for producing a test piece used for evaluating adhesion between films.
[Fig. 5] Fig. 5 is a schematic diagram for illustrating a method for evaluating adhesion between films.
[Fig. 6] Fig. 6 is a schematic diagram for illustrating a method for producing a test piece used for evaluating adhesion between a film and a copper foil.
[Fig. 7] Fig. 7 is a schematic diagram for illustrating a method for evaluating the adhesion between a film and a copper foil, and tensile adhesive strength.

## Description of Embodiments

### [Thermoplastic resin composition]

The thermoplastic resin composition of the present invention contains a crystalline thermoplastic polyimide resin (A) and a polyether ketone ketone resin (B), the crystalline thermoplastic polyimide resin (A) containing a repeating structural unit represented by the following formula (1) and a repeating structural unit represented by the following formula (2), a content ratio of the repeating structural unit of formula (1) with respect to the total of the repeating structural unit of formula (1) and the repeating structural unit of formula (2) being 15 to 70 mol%, wherein
an absolute value of a difference between a melting point $Tm_A$ of the component (A) and a melting point $Tm_B$ of the component (B), $|Tm_A-Tm_B|$, is 0 to 40°C.

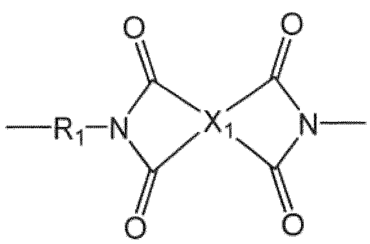

(1)

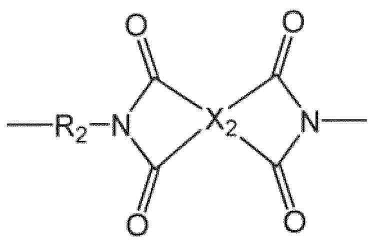

(2)

wherein $R_1$ represents a divalent group having from 6 to 22 carbon atoms containing at least one alicyclic hydrocarbon structure; $R_2$ represents a divalent chain aliphatic group having from 5 to 16 carbon atoms; and $X_1$ and $X_2$ each independently represent a tetravalent group having from 6 to 22 carbon atoms containing at least one aromatic ring.
The thermoplastic resin composition of the present invention contains a component (A), which is a crystalline thermoplastic resin, and a component (B), and thus can have a lower crystallization temperature than the crystalline thermoplastic resin while maintaining heat resistance and crystallinity. That is, the crystallization temperature of the thermoplastic resin composition is lower than the crystallization temperature of the component (A) alone or the component (B) alone, which are the raw materials of the resin.

Although the reason why the above effects are obtained in the present invention is not clear, it was found that when a component (A) and a component (B) having a $|Tm_A-Tm_B|$ that is equal to or less than a specific value are used in the thermoplastic resin composition, or a molded article thereof, of the present invention, a lamellar microphase-separated structure, which will be described later, is formed due to intermolecular interaction between the component (A) and the component (B), and it is believed that the formation of this characteristic morphology exerts an effect of reducing the crystallization temperature. It is also thought that sufficient heat resistance and crystallinity for practical use are also maintained.

In addition, when a polyether ether ketone resin (PEEK) is used instead of the polyether ketone ketone resin which is component (B), even if compounded with component (A), a lamellar microphase-separated structure is not formed in the obtained thermoplastic resin composition or molded article thereof, and the effect of reducing the crystallization temperature is also not exerted.

<Crystalline thermoplastic polyimide resin (A)>

The crystalline thermoplastic polyimide resin (A) (hereinafter also simply referred to as "polyimide resin (A)") used in the present invention contains a repeating structural unit represented by the following formula (1) and a repeating structural unit represented by the following formula (2), and a content ratio of the repeating structural unit of formula (1) with respect to the total of the repeating structural unit of formula (1) and the repeating structural unit of formula (2) is 15 to 70 mol%.

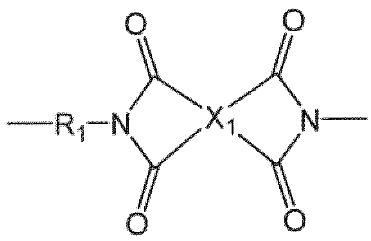

(1)

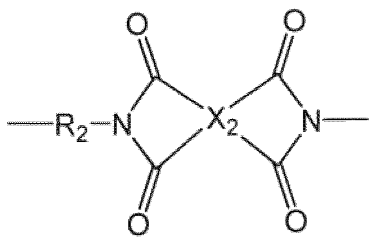

(2)

wherein $R_1$ represents a divalent group having from 6 to 22 carbon atoms containing at least one alicyclic hydrocarbon structure; $R_2$ represents a divalent chain aliphatic group having from 5 to 16 carbon atoms; and $X_1$ and $X_2$ each independently represent a tetravalent group having from 6 to 22 carbon atoms containing at least one aromatic ring.

The polyimide resin (A) used in the present invention is a crystalline thermoplastic resin, which is preferably in a powder or pellet form. In the present specification, "thermoplastic polyimide resin" is distinguished from, for example, polyimide resins formed by closing the imide ring after molding in a state of a polyimide precursor such as a polyamic acid and having no glass transition temperature (Tg), or polyimide resins that decompose at a temperature lower than the glass transition temperature.

The repeating structural unit of formula (1) will be described in detail below.

$R_1$ represents a divalent group having from 6 to 22 carbon atoms containing at least one alicyclic hydrocarbon structure. The alicyclic hydrocarbon structure herein means a ring derived from an alicyclic hydrocarbon compound, and the alicyclic hydrocarbon compound may be either saturated or unsaturated and may be either monocyclic or polycyclic.

Examples of the alicyclic hydrocarbon structure include a cycloalkane ring, such as a cyclohexane ring, a cycloalkene ring, such as cyclohexene, a bicycloalkane ring, such as a norbornane ring, and a bicycloalkene ring, such as norbornene, but the alicyclic hydrocarbon structure is not limited thereto. Among these, a cycloalkane ring is preferred, a cycloalkane ring having from 4 to 7 carbon atoms is more preferred, and a cyclohexane ring is further preferred.

$R_1$ has from 6 to 22 carbon atoms, and preferably from 8 to 17 carbon atoms.

$R_1$ contains at least one alicyclic hydrocarbon structure, and preferably from 1 to 3 alicyclic hydrocarbon structures.

$R_1$ is preferably a divalent group represented by the following formula (R1-1) or (R1-2):

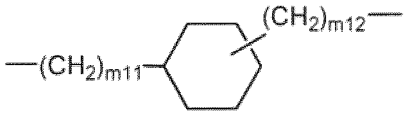

(R1-1)

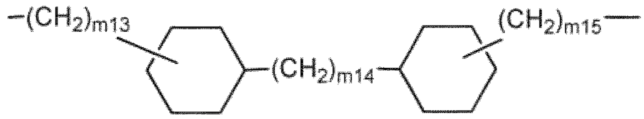

(R1-2)

wherein $m_{11}$ and $m_{12}$ each independently represent an integer of 0-2, and preferably 0 or 1; and $m_{13}$ to $m_{15}$ each independently represent an integer of 0-2, and preferably 0 or 1.

$R_1$ is particularly preferably a divalent group represented by the following formula (R1-3):

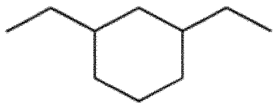

(R1-3)

In the divalent group represented by the formula (R1-3), the conformation of the two methylene groups with respect to the cyclohexane ring may be either cis or trans, and the ratio of cis and trans may be an arbitrary value.

$X_1$ is a tetravalent group having from 6 to 22 carbon atoms containing at least one aromatic ring. The aromatic ring may be either a monocyclic ring or a condensed ring, and examples thereof include a benzene ring, a naphthalene ring, an anthracene ring and a tetracene ring, but the aromatic ring is not limited thereto. Among these, a benzene ring and a naphthalene ring are preferred, and a benzene ring is more preferred.

$X_1$ has from 6 to 22 carbon atoms, and preferably has from 6 to 18 carbon atoms.

$X_1$ contains at least one aromatic ring, and preferably contains from 1 to 3 aromatic rings.

$X_1$ is preferably a tetravalent group represented by one of the following formulae (X-1) to (X-4):

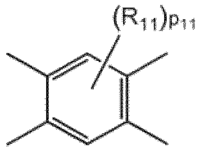

(X-1)

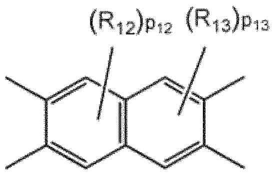

(X-2)

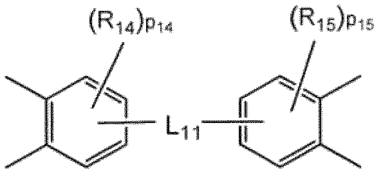

(X-3)

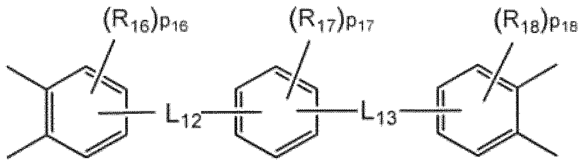

(X-4)

wherein $R_{11}$ to $R_{18}$ each independently represent an alkyl group having from 1 to 4 carbon atoms; $p_{11}$ to $p_{13}$ each independently represent an integer of 0-2, and preferably 0; $p_{14}$, $p_{15}$, $p_{16}$ and $p_{18}$ each independently represent an integer of 0-3, and preferably 0; $p_{17}$ represents an integer of 0-4, and preferably 0; and $L_{11}$ to $L_{13}$ each independently represent a single bond, an ether group, a carbonyl group or an alkylene group having from 1 to 4 carbon atoms.

$X_1$ is a tetravalent group having from 6 to 22 carbon atoms containing at least one aromatic ring, and therefore $R_{12}$, $R_{13}$, $p_{12}$ and $p_{13}$ in the formula (X-2) are selected in such a manner that the tetravalent group represented by the formula (X-2) has from 10 to 22 carbon atoms.

Similarly, $L_{11}$, $R_{14}$, $R_{15}$, $p_{14}$ and $p_{15}$ in the formula (X-3) are selected in such a manner that the tetravalent group represented by the formula (X-3) has from 12 to 22 carbon atoms, and $L_{12}$, $L_{13}$, $R_{16}$, $R_{17}$, $R_{18}$, $p_{16}$, $p_{17}$ and $p_{18}$ in the formula (X-4) are selected in such a manner that the tetravalent group represented by the formula (X-4) has from 18 to 22 carbon atoms.

$X_1$ is particularly preferably a tetravalent group represented by the following formula (X-5) or (X-6):

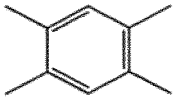

(X-5)

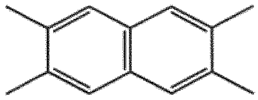

(X-6)

Next, the repeating structural unit of formula (2) will be described in detail below.

$R_2$ represents a divalent chain aliphatic group having from 5 to 16 carbon atoms, preferably from 6 to 14 carbon atoms, more preferably from 7 to 12 carbon atoms, and further preferably from 8 to 10 carbon atoms. As used herein, "chain aliphatic group" means a group derived from a chain aliphatic compound, and the chain aliphatic compound may be either saturated or unsaturated, may be in the form of either linear or branched chain, and may contain a hetero atom, such as an oxygen atom.

$R_2$ is preferably an alkylene group having from 5 to 16 carbon atoms, more preferably an alkylene group having from 6 to 14 carbon atoms, further preferably an alkylene group having from 7 to 12 carbon atoms, and particularly preferably an alkylene group having from 8 to 10 carbon atoms. The alkylene group may be either a linear alkylene group or a branched alkylene group, and is preferably a linear alkylene group.

$R_2$ preferably represents at least one selected from the group consisting of an octamethylene group and a decamethylene group, and particularly preferably represents an octamethylene group.

Another preferred embodiment of $R_2$ is a divalent chain aliphatic group having from 5 to 16 carbon atoms containing an ether group. The divalent chain aliphatic group preferably has from 6 to 14 carbon atoms, more preferably from 7 to 12 carbon atoms, and further preferably from 8 to 10 carbon atoms. Preferred examples of the group include a divalent group represented by the following formula (R2-1) or (R2-2):

$$-(CH_2)_{m21}-O-(CH_2)_{m22}- \qquad \text{(R2-1)}$$

$$-(CH_2)_{m23}-O-(CH_2)_{m24}-O-(CH_2)_{m25}- \qquad \text{(R2-2)}$$

wherein $m_{21}$ and $m_{22}$ each independently represent an integer of 1-15, preferably 1-13, more preferably 1-11, and further preferably 1-9; and $m_{23}$ to $m_{25}$ each independently represent an integer of 1-14, preferably 1-12, more preferably 1-10, and further preferably 1-8.

$R_2$ represents a divalent chain aliphatic group having from 5 to 16 carbon atoms (preferably from 6 to 14 carbon atoms, more preferably from 7 to 12 carbon atoms, and further preferably from 8 to 10 carbon atoms), and therefore $m_{21}$ and $m_{22}$ in the formula (R2-1) are selected so that the divalent group represented by the formula (R2-1) has from 5 to 16 carbon atoms (preferably from 6 to 14 carbon atoms, more preferably from 7 to 12 carbon atoms, and further preferably from 8 to 10 carbon atoms), i.e., $m_{21} + m_{22}$ is from 5 to 16 (preferably 6 to 14, more preferably 7 to 12, and further preferably 8 to 10).

Similarly, $m_{23}$ to $m_{25}$ in the formula (R2-2) are selected so that the divalent group represented by the formula (R2-2) has from 5 to 16 carbon atoms (preferably from 6 to 14 carbon atoms, more preferably from 7 to 12 carbon atoms, and further preferably from 8 to 10 carbon atoms), i.e., $m_{23} + m_{24} + m_{25}$ is from 5 to 16 (preferably from 6 to 14 carbon atoms, more preferably from 7 to 12 carbon atoms, and further preferably from 8 to 10 carbon atoms).

$X_2$ is defined similarly to $X_1$ in the formula (1), and preferred embodiments thereof are also the same.

The content ratio of the repeating structural unit of the formula (1) with respect to the total of the repeating structural unit of the formula (1) and the repeating structural unit of the formula (2) is 15 to 70 mol%. In the case where the content ratio of the repeating structural unit of the formula (1) is in the above range, the polyimide resin (A) may be crystallized even in an ordinary injection molding cycle, and an effect of reducing the crystallization temperature when compounded with the component (B) is exerted more easily.

The content ratio of the repeating structural unit of the formula (1) with respect to the total of the repeating structural unit of the formula (1) and the repeating structural unit of the formula (2) is, from the viewpoint of molding processability, preferably 20 mol% or more, more preferably 25 mol% or more, further preferably 30 mol% or more, and still further preferably 32 mol% or more, and from the viewpoint of maintaining high crystallinity, is preferably 65 mol% or less, more preferably 60 mol% or less, further preferably 50 mol% or less, still further preferably 40 mol% or less, still further preferably less than 40 mol%, and still further preferably 35 mol% or less.

The content ratio of the total of the repeating structural unit of the formula (1) and the repeating structural unit of the formula (2) with respect to the total repeating structural units constituting the polyimide resin (A) is preferably 50 to 100 mol%, more preferably 75 to 100 mol%, further preferably 80 to 100 mol%, and still further preferably 85 to 100 mol%. It is

noted that "the total of all repeating structural units constituting the polyimide resin (A)" means the total of the structural units in the polyimide resin (A) when a structural unit containing one polyimide structure is regarded as one structural unit.

The polyimide resin (A) may further contain a repeating structural unit represented by the following formula (3). In this case, the content ratio of the repeating structural unit of formula (3) with respect to the total of the repeating structural unit of formula (1) and the repeating structural unit of formula (2) is preferably 25 mol% or less, and from the viewpoint of maintaining crystallinity, is preferably 20 mol% or less, and more preferably 15 mol% or less.

Further, the content ratio is preferably 5 mol% or more, and more preferably 10 mol% or more, from the viewpoint of enhancing heat resistance.

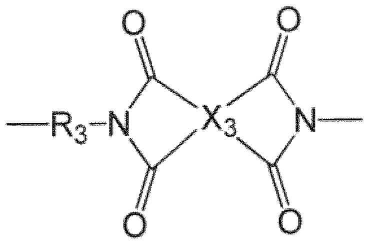

(3)

wherein $R_3$ represents a divalent group having from 6 to 22 carbon atoms containing at least one aromatic ring; and $X_3$ represents a tetravalent group having from 6 to 22 carbon atoms containing at least one aromatic ring.

$R_3$ is a divalent group having from 6 to 22 carbon atoms containing at least one aromatic ring. The aromatic ring may be either a monocyclic ring or a condensed ring, and examples thereof include a benzene ring, a naphthalene ring, an anthracene ring and a tetracene ring, but the aromatic ring is not limited thereto. Among these, a benzene ring and a naphthalene ring are preferred, and a benzene ring is more preferred.

$R_3$ has from 6 to 22 carbon atoms, and preferably has from 6 to 18 carbon atoms.

$R_3$ contains at least one aromatic ring, and preferably contains from 1 to 3 aromatic rings.

The aromatic ring may also be bonded to a monovalent or divalent electron-withdrawing group. Examples of the monovalent electron-withdrawing group include a nitro group, a cyano group, a p-toluenesulfonyl group, halogen, an alkyl halide group, a phenyl group, and an acyl group. Examples of the divalent electron-withdrawing group include alkylene halide groups such as alkylene fluoride groups (e.g., $-C(CF_3)_2-$ and $-(CF_2)_p-$(wherein p is an integer of 1-10), as well as -CO-, $-SO_2-$, -SO-, -CON'H-, and -COO-.

$R_3$ is preferably a divalent group represented by the following formula (R3-1) or (R3-2):

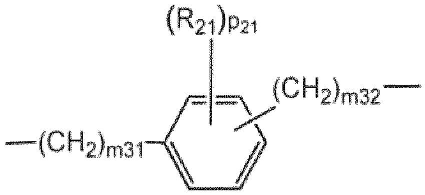

(R3-1)

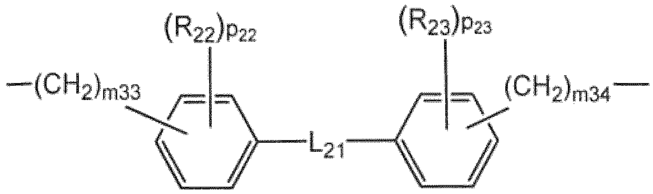

(R3-2)

wherein $m_{31}$ and $m_{32}$ each independently represent an integer of 0-2, and preferably 0 or 1; $m_{33}$ and $m_{34}$ each independently represent an integer of 0-2, and preferably 0 or 1; $R_{21}$, $R_{22}$ and $R_{23}$ each independently represent an alkyl group having from 1 to 4 carbon atoms, an alkenyl group having from 2 to 4 carbon atoms or an alkynyl group having from 2 to 4 carbon atoms; $p_{21}$, $p_{22}$ and $p_{23}$ each represent an integer of 0-4, and preferably 0; and $L_{21}$ represents a single bond, an ether group, a carbonyl group or an alkylene group having from 1 to 4 carbon atoms.

$R_3$ is a divalent group having from 6 to 22 carbon atoms containing at least one aromatic ring, and therefore $m_{31}$, $m_{32}$, $R_{21}$ and $p_{21}$ in the formula (R3-1) are selected in such a manner that the divalent group represented by the formula (R3-1) has from 6 to 22 carbon atoms.

Similarly, $L_{21}$, $m_{33}$, $m_{34}$, $R_{22}$, $R_{23}$, $p_{22}$ and $p_{23}$ in the formula (R3-2) are selected in such a manner that the divalent group represented by the formula (R3-2) has from 12 to 22 carbon atoms.

$X_3$ is defined similarly to $X_1$ in the formula (1), and preferred embodiments thereof are also the same.

The polyimide resin (A) may further contain a repeating structural unit represented by the following formula (4):

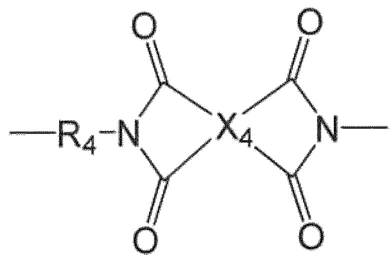

(4)

wherein $R_4$ represents a divalent group containing $-SO_2-$ or $-Si(R_x)(R_y)O-$; $R_x$ and $R_y$ each independently represent a chain aliphatic group having from 1 to 3 carbon atoms, or a phenyl group; and $X_4$ represents a tetravalent group having from 6 to 22 carbon atoms containing at least one aromatic ring.

$X_4$ is defined similarly to $X_1$ in the formula (1), and preferred embodiments thereof are also the same.

The end structure of the polyimide resin (A) is not particularly limited, and in addition to an end amino group and an end carboxy group, may have an aromatic ring-containing group, an aliphatic group, and the like. Among these, the polyimide resin (A) preferably has a chain aliphatic group having from 5 to 14 carbon atoms at the end thereof.

The chain aliphatic group may be either saturated or unsaturated, and may be in the form of either linear or branched chain. When the polyimide resin (A) contains the above particular group at the end thereof, it is possible to obtain a resin composition excellent in heat aging resistance.

Example of the saturated chain aliphatic group having from 5 to 14 carbon atoms include an n-pentyl group, an n-hexyl group, an n-heptyl group, an n-octyl group, an n-nonyl group, an n-decyl group, an n-undecyl group, a lauryl group, an n-tridecyl group, an n-tetradecyl group, an isopentyl group, a neopentyl group, a 2-methylpentyl group, a 2-methylhexyl group, a 2-ethylpentyl group, a 3-ethylpentyl group, an isooctyl group, a 2-ethylhexyl group, a 3-ethylhexyl group, an isononyl group, a 2-ethyloctyl group, an isodecyl group, an isododecyl group, an isotridecyl group and an isotetradecyl group.

Example of the unsaturated chain aliphatic group having from 5 to 14 carbon atoms include a 1-pentenyl group, a 2-pentenyl group, a 1-hexenyl group, a 2-hexenyl group, a 1-heptenyl group, a 2-heptenyl group, a 1-octenyl group, a 2-octenyl group, a nonenyl group, a decenyl group, a dodecenyl group, a tridecenyl group and a tetradecenyl group.

Among these, the chain aliphatic group is preferably a saturated chain aliphatic group, and more preferably a saturated linear aliphatic group. The chain aliphatic group preferably has 6 or more carbon atoms, more preferably 7 or more carbon atoms and further preferably 8 or more carbon atoms, and preferably has 12 or less carbon atoms, more preferably 10 or less carbon atoms and further preferably 9 or less carbon atoms from the viewpoint of achievement of heat aging resistance. The chain aliphatic group may be adopted singly or in combinations of two or more.

The chain aliphatic group is particularly preferably at least one selected from the group consisting of an n-octyl group, an isooctyl group, a 2-ethylhexyl group, an n-nonyl group, an isononyl group, an n-decyl group and an isodecyl group, further preferably at least one selected from the group consisting of an n-octyl group, an isooctyl group, a 2-ethylhexyl group, an n-nonyl group, and an isononyl group, and most preferably at least one selected from the group consisting of an n-octyl group, an isooctyl group, and a 2-ethylhexyl group.

The polyimide resin (A) preferably contains only a chain aliphatic group having from 5 to 14 carbon atoms, besides a terminal amino group and a terminal carboxy group, at the end thereof from the viewpoint of heat aging resistance. When a group, besides the above groups, is contained at the end, the content thereof with respect to the chain aliphatic group having from 5 to 14 carbon atoms is preferably 10 mol% or less and more preferably 5 mol% or less.

The content of the chain aliphatic group having from 5 to 14 carbon atoms in the polyimide resin (A) is preferably 0.01 mol% or more, more preferably 0.1 mol% or more, and further preferably 0.2 mol% or more based on the total 100 mol% of the total repeating structural units constituting the polyimide resin (A) from the viewpoint of exerting excellent heat aging resistance. Further, to ensure a sufficient molecular weight and obtain good mechanical properties, the content of the chain aliphatic group having from 5 to 14 carbon atoms in the polyimide resin (A) is, with respect to a total of 100 mol% of all the repeating structural units constituting the polyimide resin (A), preferably 10 mol% or less, more preferably 6 mol% or less, and further preferably 3.5 mol% or less.

The content of the chain aliphatic group having from 5 to 14 carbon atoms in the polyimide resin (A) can be determined by depolymerization of the polyimide resin (A).

The polyimide resin (A) preferably has a melting point of 360°C or lower and a glass transition temperature of 150°C or higher. The melting point $Tm_A$ of the polyimide resin (A) is preferably 270°C or higher, more preferably 280°C or higher, and further preferably 290°C or higher from the viewpoint of heat resistance, and preferably 345°C or lower, more preferably 340°C or lower, and further preferably 335°C or lower from the viewpoint of exerting high molding processability.

In addition, the glass transition temperature Tg of the polyimide resin (A) is more preferably 160°C or higher and more preferably 170°C or higher from the viewpoint of heat resistance, and is preferably 250°C or lower, more preferably 230°C or lower, and further preferably 200°C or lower from the viewpoint of exerting high molding processability.

The crystallization temperature Tc of the polyimide resin (A) is preferably 200°C or higher, more preferably 220°C or higher, and further preferably 250°C or higher from the viewpoint of heat resistance, and preferably 350°C or lower, more preferably 320°C or lower, and further preferably 300°C or lower from the viewpoint of molding processability.

The polyimide resin (A) has a heat of melting Hm of preferably 5.0 mJ/mg or more, more preferably 10.0 mJ/mg or more, and further preferably 17.0 mJ/mg or more from the viewpoint of crystallinity, heat resistance, mechanical strength, and chemical resistance. The upper limit of the heat of melting Hm is not particularly limited, but is usually 45.0 mJ/mg or less.

The "heat of melting Hm" of the polyimide resin (A) means the exothermic amount of the heat of melting peak near the melting point observed based on differential scanning calorimeter measurement when the polyimide resin (A) is heated to a temperature equal to or above the melting point at a heating rate of 10°C/min to melt the polyimide resin (A), then cooled at a cooling rate of 20°C/min, and then again melted by heating at a heating rate of 10°C/min.

The polyimide resin (A) has a heat of crystallization He of preferably 5.0 mJ/mg or more, more preferably 10.0 mJ/mg or more, and further preferably 17.0 mJ/mg or more from the viewpoint of crystallinity, heat resistance, mechanical strength, and chemical resistance. The upper limit of the heat of crystallization fie is not particularly limited, but is usually 45.0 mJ/mg or less.

The "heat of crystallization Hc" of the polyimide resin (A) means the exothermic amount of the crystallization exothermic peak observed based on differential scanning calorimeter measurement when the polyimide resin (A) is melted and then cooled at a cooling rate of 20°C/min.

The melting point $Tm_A$, glass transition temperature Tg, crystallization temperature Tc, heat of melting Hm, and heat of crystallization He of the polyimide resin (A) can be specifically measured by the methods described in the Examples.

The logarithmic viscosity of the polyimide resin (A) at 30°C in a 0.5 % by mass concentrated sulfuric acid solution is preferably in the range of 0.2 to 2.0 dL/g, and more preferably 0.3 to 1.8 dL/g. When the logarithmic viscosity is 0.2 dL/g or more, sufficient mechanical strength can be obtained when the obtained thermoplastic resin composition is formed into a molded article, and when the logarithmic viscosity is 2.0 dL/g or less, molding processability and handleability are good. The logarithmic viscosity μ is obtained according to the following expression by measuring the elapsed times for flowing concentrated sulfuric acid and the polyimide resin solution at 30°C with a Cannon-Fenske viscometer.

$$\mu = \ln(ts/t_0)/C$$

$t_0$: elapsed time for flowing concentrated sulfuric acid
ts: elapsed time for flowing polyimide resin solution
C: 0.5 (g/dL)

The weight average molecular weight Mw of the polyimide resin (A) is preferably in the range of 10,000 to 150,000, more preferably 15,000 to 100,000, further preferably 20,000 to 80,000, still further preferably 30,000 to 70,000, and still further preferably 35,000 to 65,000. When the weight average molecular weight Mw of the polyimide resin (A) is 10,000 or more, the mechanical strength of the obtained molded article is good, and when Mw is 40,000 or more, the stability of the mechanical strength is good, and when Mw is 150,000 or less, molding processability is good.

The weight average molecular weight Mw of the polyimide resin (A) can be measured by gel permeation chromatography (GPC) method using polymethyl methacrylate (PMMA) as a standard sample.

(Method for producing polyimide resin (A))

The polyimide resin (A) may be produced by reacting a tetracarboxylic acid component and a diamine component. The tetracarboxylic acid component contains a tetracarboxylic acid containing at least one aromatic ring and/or a derivative thereof, and the diamine component contains a diamine containing at least one alicyclic hydrocarbon structure and a chain aliphatic diamine.

The tetracarboxylic acid containing at least one aromatic ring is preferably a compound having four carboxy groups that are bonded directly to the aromatic ring, and may contain an alkyl group in the structure thereof. The tetracarboxylic acid preferably has from 6 to 26 carbon atoms. Preferred examples of the tetracarboxylic acid include pyromellitic acid, 2,3,5,6-toluenetetracarboxylic acid, 3,3',4,4'-benzophenonetetracarboxylic acid, 3,3',4,4'-biphenyltetracarboxylic acid and 1,4,5,8-naphthalenetetracarboxylic acid. Among these, pyromellitic acid is more preferred.

Examples of the derivative of the tetracarboxylic acid containing at least one aromatic ring include an anhydride

and an alkyl ester compound of a tetracarboxylic acid containing at least one aromatic ring. The derivative of the tetracarboxylic acid preferably has from 6 to 38 carbon atoms. Examples of the anhydride of the tetracarboxylic acid include pyromellitic monoanhydride, pyromellitic dianhydride, 2,3,5,6-toluenetetracarboxylic dianhydride, 3,3',4,4'-diphenylsulfonetetracarboxylic dianhydride, 3,3',4,4'-benzophenonetetracarboxylic dianhydride, 3,3',4,4'-biphenyltetracarboxylic dianhydride and 1,4,5,8-naphthalenetetracarboxylic dianhydride. Examples of the alkyl ester compound of the tetracarboxylic acid include dimethyl pyromellitate, diethyl pyromellitate, dipropyl pyromellitate, diisopropyl pyromellitate, dimethyl 2,3,5,6-toluenetetracarboxylate, dimethyl 3,3',4,4'-diphenylsulfonetetracarboxylate, dimethyl 3,3',4,4'-benzophenonetetracarboxylate, dimethyl 3,3',4,4'-biphenyltetracarboxylate and dimethyl 1,4,5,8-naphthalenetetracarboxylate. The alkyl group in the alkyl ester compound of the tetracarboxylic acid preferably has from 1 to 3 carbon atoms.

The tetracarboxylic acid containing at least one aromatic ring and/or the derivative thereof may be used as a sole compound selected from the aforementioned compounds or may be used as a combination of two or more compounds.

The diamine containing at least one alicyclic hydrocarbon structure preferably has from 6 to 22 carbon atoms, and preferred examples thereof include 1,2-bis(aminomethyl)cyclohexane, 1,3-bis(aminomethyl)cyclohexane, 1,4-bis(aminomethyl)cyclohexane, 1,2-cyclohexanediamine, 1,3-cyclohexanediamine, 1,4-cyclohexanediamine, 4,4'-diaminodicyclohexylmethane, 4,4'-methylenebis(2-methylcyclohexylamine), carvone diamine, limonene diamine, isophorone diamine, norbornane diamine, bis(aminomethyl)tricyclo[5.2.1.0$^{2,6}$]decane, 3,3'-dimethyl-4,4'-diaminodicyclohexylmethane and 4,4'-diaminodicyclohexylpropane. These compounds may be used solely or may be used as a combination of two or more compounds selected therefrom. Among these, 1,3-bis(aminomethyl)cyclohexane is preferably used. A diamine containing an alicyclic hydrocarbon structure generally has conformational isomers, and the ratio of the cis isomer and the trans isomer is not particularly limited.

The chain aliphatic diamine may be in the form of either linear or branched chain, and has preferably from 5 to 16 carbon atoms, more preferably from 6 to 14 carbon atoms and further preferably from 7 to 12 carbon atoms. The linear moiety having from 5 to 16 carbon atoms may contain an ether bond in the course thereof. Preferred examples of the chain aliphatic diamine include 1,5-pentamethylenediamine, 2-methylpentane-1,5-diamine, 3-methylpentane-1,5-diamine, 1,6-hexamethylenediamine, 1,7-heptamethylenediamine, 1,8-octamethylenediamine, 1,9-nonamethylenediamine, 1,10-decamethylenediamine, 1,11-undecamethylenediamine, 1,12-dodecamethylenediamine, 1,13-tridecamethylenediamine, 1,14-tetradecamethylenediamine, 1,16-hexadecamethylenediamine, and 2,2'-(ethylenedioxy)bis(ethyleneamine).

The chain aliphatic diamine may be used as a sole compound or as a mixture of plural kinds thereof. Among these, a chain aliphatic diamine having from 8 to 10 carbon atoms can be preferably used, and at least one selected from the group consisting of 1,8-octamethylenediamine and 1,10-decamethylenediamine can be particularly preferably used.

In the production of the polyimide resin (A), the molar ratio of the charged amount of the diamine containing at least one alicyclic hydrocarbon structure with respect to the total amount of the diamine containing at least one alicyclic hydrocarbon structure and the chain aliphatic diamine is preferably 15 to 70 mol%. The molar ratio is preferably 20 mol% or more, more preferably 25 mol% or more, further preferably 30 mol% or more, and further preferably 32 mol% or more, and is preferably 60 mol% or less, more preferably 50 mol% or less, further preferably less than 40 mol%, and further preferably 35 mol% or less from the viewpoint of exerting high crystallinity.

The diamine component may contain a diamine containing at least one aromatic ring. The diamine containing at least one aromatic ring preferably has from 6 to 22 carbon atoms, and examples thereof include o-xylylenediamine, m-xylylenediamine, p-xylylenediamine, 1,2-diethynylbenzenediamine, 1,3-diethynylbenzenediamine, 1,4-diethynylbenzenediamine, 1,2-diaminobenzene, 1,3-diaminobenzene, 1,4-diaminobenzene, 4,4'-diaminodiphenyl ether, 3,4'-diaminodiphenyl ether, 4,4'-diaminodiphenylmethane, $\alpha,\alpha'$-bis(4-aminophenyl)-1,4-diisopropylbenzene, $\alpha,\alpha'$-bis(3-aminophenyl)-1,4-diisopropylbenzene, 2,2-bis(4-(4-aminophenoxy)phenyl)propane, 2,6-diaminonaphthalene and 1,5-diaminonaphthalene.

The molar ratio of the charged amount of the diamine containing at least one aromatic ring with respect to the total amount of the diamine containing at least one alicyclic hydrocarbon structure and the chain aliphatic diamine is preferably 5 mol% or less, and from the viewpoint of maintaining crystallinity, more preferably 20 mol% or less, and further preferably 15 mol% or less. Further, the molar ratio is preferably 5 mol% or more, and more preferably 10 mol% or more from the viewpoint of enhancing heat resistance.

In addition, the molar ratio is preferably 12 mol% or less, more preferably 10 mol% or less, further preferably 5 mol% or less and still more preferably 0 mol% from the viewpoint of a decrease in coloration of the polyimide resin (A).

In the production of the polyimide resin (A), the charged amount ratio of the tetracarboxylic acid component and the diamine component is preferably from 0.9 to 1.1 mol of the diamine component per 1 mol of the tetracarboxylic acid component.

**In** the production of the polyimide resin (A), an end capping agent may be mixed in addition to the tetracarboxylic acid component and the diamine component. The end capping agent is preferably at least one selected from the group consisting of a monoamine compound and a dicarboxylic acid compound. It is sufficient for the amount of the end capping agent used to be an amount in which a desired amount of the end group can be introduced into the polyimide resin (A). This

used amount is, based on one mole of the tetracarboxylic acid and/or derivative thereof, preferably from 0.0001 to 0.1 moles, more preferably from 0.001 to 0.06 moles, and further preferably from 0.002 to 0.035 moles.

Among them, monoamine end capping agents are preferable as the end capping agent, and from the viewpoint of introducing the above-described chain aliphatic group having 5 to 14 carbon atoms at an end of the polyimide resin (A) to improve heat aging resistance, a monoamine that has a chain aliphatic group having 5 to 14 carbon atoms is more preferable, and a monoamine that has a saturated linear aliphatic group having 5 to 14 carbon atoms is further preferable.

The end capping agent is particularly preferably at least one selected from the group consisting of n-octylamine, isooctylamine, 2-ethylhexylamine, n-nonylamine, isononylamine, n-decylamine, and isodecylamine, further preferably at least one selected from the group consisting of n-octylamine, isooctylamine, 2-ethylhexylamine, n-nonylamine, and isononylamine, and most preferably at least one selected from the group consisting of n-octylamine, isooctylamine, and 2-ethylhexylamine.

As a polymerization method for producing the polyimide resin (A), a known polymerization method may be applied, and the method described in WO 2016/147996 can be used.

<Polyether ketone ketone resin (B)>

The thermoplastic resin composition of the present invention contains a specific crystalline thermoplastic polyimide resin (A) and a polyether ketone ketone resin (B). Preferable examples of the polyether ketone ketone resin (B) include resins represented by the following structural formula (I).

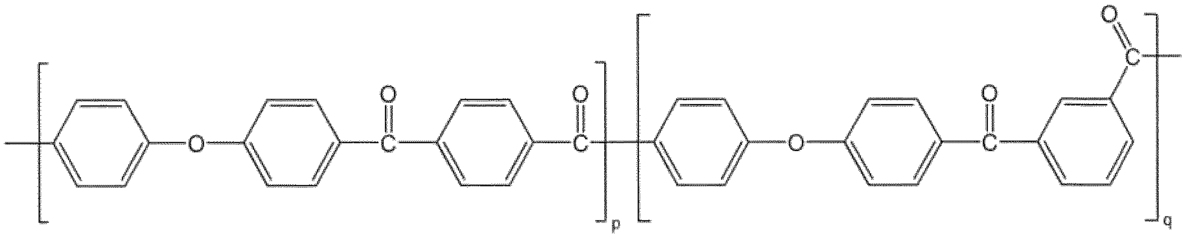

(I)

wherein p and q are each independently a number representing the number of structural units.

The resin represented by the structural formula (I) is produced using diphenyl ether, terephthalic acid chloride, and isophthalic acid chloride.

In the resin represented by the structural formula (1), the molar ratio of the structural unit derived from the terephthalic acid chloride with respect to the structural unit derived from the isophthalic acid chloride (hereinafter also referred to as "T/I ratio") is preferably 50/50 to 99/1, more preferably 50/50 to 90/10, further preferably 60/40 to 80/20, still further preferably 60/40 to 75/25, and still further preferably 65/35 to 75/25 from the viewpoint of ensuring crystallinity and the viewpoint of obtaining a sufficient effect of reducing the crystallization temperature when compounded with the component (A).

The melting point $Tm_B$ of the polyether ketone ketone resin (B) is preferably 270°C or higher, more preferably 280°C or higher, and further preferably 290°C or higher from the viewpoint of heat resistance, and preferably 360°C or lower, more preferably 345°C or lower, further preferably 340°C or lower, and still further preferably 335°C or lower from the viewpoint of exerting high molding processability.

The glass transition temperature of the polyether ketone ketone resin (B) is 140°C or higher, and more preferably 150°C or higher from the viewpoint of heat resistance, and preferably 200°C or lower, and more preferably 180°C or lower from the viewpoint of exerting high molding processability.

The melting point $Tm_B$ and glass transition temperature of the polyether ketone ketone resin (B) can both be measured using a differential scanning calorimeter in the same manner as for the component (A).

As the polyether ketone ketone resin (B), a commercially available product such as polyether ketone ketone resin (PEKK) 6000 series, 7000 series, and 8000 series produced by ARKEMA can also be used.

The absolute value of the difference between the melting point $Tm_A$ of the component (A) and the melting point $Tm_B$ of the component (B), $|Tm_A-Tm_B|$, used in the thermoplastic resin composition is 0 to 40°C, preferably 0 to 30°C, more preferably 0 to 20°C, and further preferably 0 to 15°C from the viewpoint of obtaining the effect of reducing the crystallization temperature.

If $|Tm_A-Tm_B|$ is not 0, either $Tm_A$ or $Tm_B$ may be the higher temperature.

Further, the melting point $Tm_A$ of the component (A) and the melting point $Tm_B$ of the component (B) used in the thermoplastic resin composition are both preferably in the range of 270 to 360°C, more preferably in the range of 280 to 350°C, and further preferably in the range of 290 to 345°C from the viewpoint of enhancing crystallinity and heat resistance and the viewpoint of ensuring appropriate crystallinity.

The mass ratio of the component (A) to the component (B) in the thermoplastic resin composition is preferably 1/99 to 80/20, more preferably 5/95 to 70/30, further preferably 10/90 to 70/30, and still further preferably 15/85 to 70/30 from the viewpoint of enhancing the effect of reducing the crystallization temperature and the viewpoint of ensuring appropriate crystallinity.

<Filler>

The thermoplastic resin composition of the present invention can further contain a filler in accordance with the desired performance.

The shape of the filler is not particularly limited, and any of particulate, plate-like, and fibrous fillers can be used. The particle size of the particulate or plate-like filler can be appropriately selected in accordance with the use of the thermoplastic resin composition, but from the viewpoint of maintain the molding processability of the thermoplastic resin composition and enhancing the mechanical strength and the like of the molded article obtained, the average particle diameter is preferably 0.1 to 200 $\mu$m, and more preferably 0.5 to 100 $\mu$m.

The filler is preferably an inorganic filler from the viewpoint of heat resistance. Examples of particulate or plate-like inorganic fillers include silica, alumina, kaolinite, wollastonite, mica, talc, clay, sericite, magnesium carbonate, barium carbonate, magnesium sulfate, barium sulfate, calcium oxide, silicon carbide, antimony trisulfide, tin sulfide, copper sulfide, iron sulfide, bismuth sulfide, zinc sulfide, glass, and the like. Note that the glass may be glass powder, glass flakes, or glass beads.

Examples of fibrous inorganic fillers include glass fiber, carbon fiber, metal fiber, graphite fiber, silica fiber, silica/alumina fiber, alumina fiber, zirconia fiber, boron nitride fiber, silicon nitride fiber, boron fiber, potassium titanate whiskers, aluminum borate whiskers, magnesium whiskers, silicon whiskers, and the like.

These inorganic fillers may be surface-treated.

When the thermoplastic resin composition contains a filler, the content of the filler in the thermoplastic resin composition depends on the desired performance, but is preferably 0.05 to 70% by mass, more preferably 0.1 to 50% by mass, and further preferably 1 to 30% by mass.

<Additive>

In addition to the above, the thermoplastic resin composition of the present invention may contain additives as required, such as a delusterant, a plasticizer, an antistatic agent, an anti-coloring agent, an anti-gelling agent, a colorant, a slidability-improving agent, an antioxidant, an ultraviolet inhibitor, a conducting agent, and a resin-modifying agent.

The amount added of the additive is not particularly limited, but from the viewpoint of exerting the effects of the additive while maintaining the physical properties derived from the polyimide resin (A) and the polyether ketone ketone resin (B), the content is usually, of the thermoplastic resin composition, 50 % by mass or less, preferably 0.0001 to 30 % by mass, more preferably 0.001 to 15 % by mass, and further preferably 0.01 to 10 % by mass.

Further, other resins other than polyimide resin (A) and polyether ketone ketone resin (B) can be blended into the thermoplastic resin composition of the present invention as long as the properties of the thermoplastic resin composition are not impaired. The other resin is preferably a thermoplastic resin having high heat resistance, such as a polyamide resin, a polyester resin, a polyimide resin other than the polyimide resin (A), a polycarbonate resin, a polyetherimide resin, a polyamideimide resin, a polyphenylene etherimide resin, a polyphenylene sulfide resin, a polysulfone resin, a polyether sulfone resin, a polyarylate resin, a liquid crystal polymer, a polyether ether ketone resin, a polyether ketone resin, a polyether ether ketone ketone resin, a polybenzimidazole resin, and the like.

However, the total content of the component (A) and component (B) in the thermoplastic resin composition of the present invention is preferably 30% by mass or more, more preferably 40% by mass or more, further preferably 50% by mass or more, still further preferably 70% by mass or more, still further preferably 80% by mass or more, and still further preferably 90% by mass or more from the viewpoint of obtaining a sufficient effect of reducing the crystallization temperature, and is 100% by mass or less.

Although the thermoplastic resin composition of the present invention can take any form, it is preferably in pellet form.

When the thermoplastic resin composition of the present invention is in pellet form, for example, the thermoplastic resin composition can be formed into pellets by adding the polyimide resin (A), the polyether ketone ketone resin (B), and various optional components as necessary into an extruder and dry-blending those components to obtain a mixture, or feeding the polyether ketone ketone resin (B) and the optional components separately from the location where the polyimide resin (A) is fed into the extruder, then melt-kneading the mixture in the extruder, extruding a strand, and cutting the strand into pellets.

The thermoplastic resin composition of the present invention preferably does not contain a solvent from the viewpoint of forming into pellets. Specifically, a solvent content in the thermoplastic resin composition is preferably 5% by

mass or less, more preferably 1% by mass or less, and further preferably 0. 1% by mass or less.

The thermoplastic resin composition preferably has a heat of crystallization Hc of 10 mJ/mg or more, more preferably 15 mJ/mg or more, and further preferably 17 mJ/mg or more from the viewpoint of ensuring sufficient crystallinity. The upper limit of the heat of crystallization Hc of the thermoplastic resin composition is not particularly limited, but is usually 45 mJ/mg or less.

In addition, it is preferable that the thermoplastic resin composition have a melting point Tm and that a difference (Tm) between the melting point Tm and the crystallization temperature Tc of the thermoplastic resin composition, (Tm-Tc), be 65°C or higher from the viewpoint of ensuring sufficient crystallinity and the viewpoint of increasing thermoformability. More preferably, (Tm-Tc) is 70°C or higher, further preferably 80°C or higher, and still further preferably 95°C or higher. The upper limit of (Tm-Tc) is not particularly limited, but is usually 150°C or less.

The melting point Tm of the thermoplastic resin composition is preferably 270°C or higher, more preferably 280°C or higher, further preferably 290°C or higher, and still further preferably 320°C or higher from the viewpoint of heat resistance, and is preferably 360°C or lower, more preferably 345°C or lower, further preferably 340°C or lower, and still further preferably 335°C or lower from the viewpoint of exerting high thermoformability.

The heat of crystallization Hc, melting point, and crystallization temperature of the thermoplastic resin composition can be measured by the same methods as described above. Further, when a plurality of peaks of the crystallization temperature Tc are observed, it is preferable that a difference between Tm and the peak $Tc_{MIN}$ located at the lowest temperature ($Tm-Tc_{MIN}$) is within the range described above.

The $Tc_{MIN}$ of the thermoplastic resin composition is preferably 190°C or higher, more preferably 200°C or higher, and further preferably 220°C or higher from the viewpoint of ensuring sufficient crystallinity, and preferably 300°C or lower, more preferably 270°C or lower, and further preferably 255°C or lower from the viewpoint of exerting sufficient adhesion.

[Molded article]

The present invention provides a molded article containing the above-described thermoplastic resin composition.

Since the thermoplastic resin composition of the present invention has thermoplasticity, the molded article of the present invention can be easily produced by thermoforming. Examples of the thermoforming method include injection molding, extrusion molding, inflation molding, blow molding, heat press molding, vacuum molding, pneumatic molding, laser molding, welding, heat adhesion, 3D printer molding, and the like, and molding may be carried out by any molding method that includes a heat melting step.

Thermoforming is preferable because molding is enabled without setting the molding temperature to an elevated temperature more than 400°C, for example. Among these, injection molding is preferably performed because such molding can be performed without the molding temperature and the mold temperature in molding being set at high temperatures. For example, injection molding can be performed at a molding temperature of preferably 400°C or lower and more preferably 360°C or lower and a mold temperature of preferably 260°C or lower and more preferably 220°C or lower.

The molded article may be produced by, for example, drying pellets produced by above-described method, then introducing the dried pellets into various kinds of molding machines, and thermoforming preferably at from 290 to 360°C, thereby producing a molded article having a desired shape.

The shape of the molded article of the present invention is not particularly limited, and examples thereof include sheets, films, strands, filaments, and the like. These may be intermediate members of an industrial product, or may be a final product.

For example, when a 3D printer molding method is used to produce the molded article, a filament-shaped molded article can be easily produced. That is, according to the present invention, a filament containing the thermoplastic resin composition can be provided.

The shape of the filament is not particularly limited, but from the viewpoint of producing by a 3D printer molding method, the filament diameter is preferably 10 mm or less, more preferably 5 mm or less, and further preferably 3.5 mm or less, and is preferably 0.1 mm or more.

Further, the molded article of the present invention may be a fiber-reinforced composite material obtained by impregnating continuous fibers such as carbon fiber or glass fiber in the thermoplastic resin composition.

It is preferable that the thermoplastic resin composition and molded article of the present invention have a lamellar microphase-separated structure. "Lamellar microphase-separated structure" means a substantially layered or fibrous microphase-separated structure. Whether or not the structure is a lamellar structure can be distinguished by, for example, observing the surface or cross-section of the thermoplastic resin composition or molded article with a scanning transmission electron microscope (STEM). The aspect ratio of the substantially layered or fibrous phase-separated structure in the lamellar microphase-separated structure is preferably 4 or more, and more preferably 5 or more, and is usually 200 or less.

Observation of the microphase-separated structure of the thermoplastic resin composition or molded article can

be performed by the method described in the Examples.

<Applications>

The thermoplastic resin composition of the present invention has heat resistance and crystallinity, suppresses an increase in crystallization temperature, has good thermoformability, and is less likely to cause a decrease in adhesion or to cause sink marks during three-dimensional modeling. Therefore, the thermoplastic resin composition of the present invention is suitable as a molding material for 3D printers, for example. Further, the thermoplastic resin composition of the present invention exerts good adhesion to an adherend due to the effect of reducing the crystallization temperature and has high heat resistance, so the thermoplastic resin composition is also suitable to use for a metal foil laminate such as a bonding sheet or a copper clad laminate.

Therefore, the present invention can provide a three-dimensional fabrication material and a bonding sheet containing the thermoplastic resin composition.

In addition, the present invention can provide a metal foil laminate including a layer composed of a molded article containing the thermoplastic resin composition and a layer composed of a metal foil.

Main examples of the metal foil laminate are copper clad laminates, and it suffices that such copper clad laminates include a layer composed of a film-shaped molded article containing the above-described thermoplastic resin composition (hereinafter, also simply referred to as a "resin film layer") and at least one copper foil layer. Examples include a laminate in which a copper foil is laminated on at least one surface, and preferably on both surfaces, of a resin film containing the above-described thermoplastic resin composition.

The resin film used for producing the copper clad laminate can be produced by the same method as the method for producing the molded article. The thickness of the resin film and the resin film layer in the copper clad laminate is preferably 5 to 500 μm, more preferably 10 to 300 μm, and further preferably 12.5 to 200 μm from the viewpoint of ensuring the strength of the copper clad laminate and the viewpoint of enhancing the adhesion between the resin film layer and the copper foil layer.

The copper foil used for producing the copper clad laminate is not particularly limited, and commercially available rolled copper foil, electrolytic copper foil, and the like can be used, but rolled copper foil is preferred from the viewpoint of flexibility. The thickness of the copper foil layer and the copper foil used to form the copper foil layer is preferably 2 to 50 μm, more preferably 3 to 30 μm, and further preferably 5 to 20 μm from the viewpoint of ensuring sufficient conductivity and the viewpoint of enhancing the adhesion with the resin film layer. The thickness is the thickness per layer of the copper foil layer or per copper foil.

In addition, the surface roughness of the copper foil used for producing the copper clad laminate is not particularly limited, but the surface roughness of the copper foil is directly related to the electrical properties of the laminate itself obtained after bonding the resin film, and in general the lower the roughness, the better the dielectric properties of the laminate. Therefore, the value of the maximum height roughness Rz of the copper foil surface is preferably in the range of 0.1 to 1 μm, and more preferably 0.2 to 0.8 μm. The maximum height roughness Rz of the surface of the copper foil can be measured using, for example, a surface roughness meter.

The thickness of the copper clad laminate is preferably 15 to 600 μm, more preferably 25 to 500 μm, and further preferably 50 to 300 μm from the viewpoint of enhancing the strength and conductivity of the copper clad laminate. In addition, the copper clad laminate may have another layer other than the resin film layer and copper foil layer as long as the effects of the present invention are not impaired.

The method for producing the copper clad laminate is not particularly limited, and a known method can be used. Examples include a method of laminating the resin film and copper foil by overlapping them and then bonding them together under heat and pressure conditions. Since the resin film contains the thermoplastic polyimide resin (A), the resin film can be bonded to the copper foil by pressing the surface in a thermally molten state.

The apparatus used to produce the copper clad laminate may be any apparatus that can bond the resin film and the copper foil together under heating and pressure conditions, such as roll laminator, a flat plate laminator, a vacuum press apparatus, a double belt press apparatus, or the like. Among these, from the viewpoint of the productivity of the copper clad laminate and the viewpoint of obtaining copper clad laminate with a good appearance, it is preferable to use a vacuum press apparatus or a double belt press apparatus. A double belt press apparatus includes a pair of upper and lower endless belts, and is an apparatus that can produce a laminate by continuously feeding the film-shaped materials (resin film and copper foil) forming each layer between the belts, and heating and pressing the materials using a heating and pressing mechanism via the endless belts.

Examples of the double belt press apparatus include the apparatus described in JP-A-2010-221694, a double belt press apparatus produced by Dimco Ltd., and the like.

The heating temperature when producing copper clad laminate by the above-described method is not particularly limited as long as it is a temperature that can soften or melt the resin film, but from the viewpoint of reducing the load on the apparatus and the production burden, the temperature is preferably in the range of 250 to 400°C, and more preferably 280

to 350°C. In addition, the pressure conditions when producing the copper clad laminate are preferably 0.1 to 20 MPa, more preferably 0.15 to 15 MPa, and further preferably 0.2 to 12 MPa from the viewpoint of enhancing the adhesion between the resin film and the copper foil and the viewpoint of reducing the load on the apparatus and the production burden. Further, the pressurizing time is preferably in the range of 1 to 600 seconds, more preferably 5 to 400 seconds, and further preferably 10 to 300 seconds from the viewpoint of enhancing production efficiency.

Although the resin film is characterized in that it can be thermally welded, in the production of the copper clad laminate, it is also possible to bond the resin film and copper foil together using an adhesive. The adhesive may be selected from any of a varnish-like adhesive, a sheet-like adhesive, a powder-like adhesive, and the like. On the other hand, from the viewpoint of ensuring low dielectric properties, it is preferable that the adhesive has low dielectric properties. Examples of adhesives having low dielectric properties include the polyimide adhesive "PIAD" series produced by Arakawa Chemical Industries, Ltd.

Examples of other applications of the thermoplastic resin composition or molded article of the present invention include transportation equipment (automobiles, aircraft, and the like), industrial equipment, electrical and electronic parts, semiconductor/liquid crystal manufacturing apparatus parts (wafer carriers, IC trays, conveyance rollers, and the like), food and beverage production apparatus parts, medical equipment parts (housings for various instruments, sterilization instruments, disinfection instruments, biological materials, HPLC columns, filters, infusion fluid pump gears, equipment handles, and the like), aircraft parts (clips, bracket fasteners, structural parts, compartment retainers, vent grills, and the like), satellite parts, insulation films, copier belt films, switches, connectors, motor parts, bearings, seal rings, gears, compressor rings, valves, tubes, ABS braking systems, transmission parts, thrust washers, seal rings, piston parts, spindle nuts, slot liners (insulating paper), biological materials (catheter tubes, artificial hip joints, artificial tooth roots, crowns, bridges, removable abutments, and the like), speaker diaphragms, monofilaments, and coating materials (wire covering materials, and the like).

## Examples

The present invention will be described in more detail with reference to examples below, but the present invention is not limited thereto. Further, various measurements and evaluations in each of the Production Examples and Examples were carried out in the following manner.

<Infrared spectroscopy (IR measurement)>

The IR measurement of the polyimide resin was performed with "JIR- WINSPEC 50", produced by JEOL, Ltd.

<Logarithmic viscosity μ>

The polyimide resin was dried at from 190 to 200°C for 2 hours, and then 0.100 g of the polyimide resin was dissolved in 20 mL of concentrated sulfuric acid (96%, produced by Kanto Chemical Co., Inc.) to form a polyimide resin solution, and the measurement was made at 30°C with a Cannon-Fenske viscometer using the polyimide resin solution as a measurement sample. The logarithmic viscosity μ was obtained according to the following expression.

$$\mu = \ln[(ts/t_0)/C]$$

$t_0$: elapsed time for flowing concentrated sulfuric acid
ts: elapsed time for flowing polyimide resin solution
C: 0.5 g/dL

<Melting point, glass transition temperature, crystallization temperature, heat of melting, and heat of crystallization>

The melting point Tm, glass transition temperature Tg, crystallization temperature Tc, heat of melting Hm, and heat of crystallization He of the thermoplastic resin alone used in each example or the thermoplastic resin composition obtained in each example were determined using a differential scanning calorimeter. ("DSC-25" produced by TA Instruments). In the measurement of the crystallization temperature Tc, a resin powder was used as the measurement sample for the polyimide resin, and pellets were used as the measurement sample for the other crystalline thermoplastic resins and crystalline thermoplastic resin compositions.

The measurement samples were subjected to a thermal history under the following conditions in a nitrogen atmosphere. The condition of the thermal history included the first heating (heating rate: 10°C/min), then cooling (cooling rate: 20 °C/min), and then second heating (heating rate: 10°C/min).

The melting point Tm was determined by reading the peak top value of the endothermic peak observed in the second heating. The glass transition temperature (Tg) was determined by reading the value observed in the second heating. The crystallization temperature (Tc) was determined by reading the peak top value of the exothermic peak observed in cooling. Regarding Tm, Tg, and Tc, when multiple peaks were observed, the peak top value of each peak was read.

The heat of melting Hm (mJ/mg) was calculated from the area of the heat of melting peak (endothermic peak) near the melting point observed when the measurement sample was heated to a temperature equal to or above the melting point at a heating rate of 10°C/min to melt the measurement sample, then cooled at a cooling rate of 20°C/min, and then again melted by heating at a heating rate of 10°C/min. The heat of crystallization He (mJ/mg) was calculated from the area of the crystallization exothermic peak observed when the measurement sample was heated to a temperature equal to or above the melting point at a heating rate of 10°C/min to melt the measurement sample, and then cooled at a cooling rate of 20°C/min.

<Crystallization half-time>

The crystallization half-time of the polyimide resin was measured with a differential scanning calorimeter ("DSC-6220", produced by SII Nanotechnology, Inc.).

The polyimide resin was held at 420°C for 10 minutes in a nitrogen atmosphere so as to completely melt, then quenched at a cooling rate of 70°C/min, and the time required from the appearance of the observed crystallization peak to the peak top thereof was calculated. In Table 1, cases where the crystallization half-time was 20 seconds or less are indicated as "<20",

<Weight average molecular weight >

The weight average molecular weight (Mw) of the polyimide resin was measured with a gel permeation chromatography (GPC) measurement apparatus "Shodex GPC-101" produced by Showa Denko K.K. under the following conditions.

Column: Shodex HFIP-806M
Mobile phase solvent: Hexafluoroisopropanol (HFIP) containing 2 mM sodium trifluoroacetate
Column temperature: 40°C
Flow rate of mobile phase: 1.0 mL/min
Specimen concentration: about 0.1 % by mass
Detector: IR detector
Amount of injection: 100 μm
Calibration curve: standard PMMA

<Heat deformation temperature (HDT)>

Using the thermoplastic resin alone used in each example or the thermoplastic resin composition obtained in each example, a molded article of 80 mm × 10 mm × 4 mm in thickness was produced by the method described below and used for measurement.

For the measurement, a flatwise test was performed in accordance with JIS K7191-1, 2: 2015. Specifically, the heat deformation temperature was measured at distance between fulcrums of 64 mm, a load of 1.80 MPa, and a heating rate of 120°C/hour using an HDT test instrument "Auto-HDT3D-2" (produced by Toyo Seiki Seisaku-Sho, Ltd.).

<Tm-$Tc_{MIN}$>

The difference between the melting point Tm and the crystallization temperature Tc measured by the above methods was calculated. In addition, when two or more peaks were observed for the crystallization temperature Tc, the difference between the melting point Tm and the peak top value of the lowest crystallization temperature ($Tc_{MIN}$) was calculated and shown in Table 2.

Production Example 1 (production of polyimide resin 1)

500 g of 2-(2-methoxyethoxy)ethanol (produced by Nippon Nyukazai Co., Ltd.) and 218.12 g (1.00 mol) of pyromellitic dianhydride (produced by Mitsubishi Gas Chemical Company, Inc.) were introduced in a 2 L separable flask equipped with a Dean-Stark apparatus, a Liebig condenser tube, a thermocouple, and a four-paddle blade. After creation

of a nitrogen flow, the mixture was agitated at 150 rpm so as to become a homogeneous suspended solution. On the other hand, 49.79 g (0.35 mol) of 1,3-bis(aminomethyl)cyclohexane (produced by Mitsubishi Gas Chemical Company, Inc., cis/trans ratio = 7/3) and 93.77 g (0.65 mol) of 1,8-octamethylenediamine (produced by Kanto Chemical Co., Inc.) were dissolved in 250 g of 2-(2-methoxyethoxy)ethanol with a 500 mL beaker, thereby preparing a mixed diamine solution. This mixed diamine solution was added into the suspended solution gradually with a plunger pump. Heat was generated due to the drop addition, but the internal temperature was adjusted to be within the range of 40 to 80°C. The dropwise addition of the mixed diamine solution was carried out in a nitrogen flow state over the whole period. The number of rotations of the agitation blade was set to 250 rpm. After the completion of the dropwise addition, 130 g of 2-(2-methoxyethoxy)ethanol and 1.284 g (0.010 mol) of n-octylamine (produced by Kanto Chemical Co., Inc.) as an end capping agent were added thereto, and the mixture was further agitated. At this stage, a pale yellow polyamic acid solution was obtained. Next, the agitation speed was set to 200 rpm, and the polyamic acid solution in the 2 L separable flask was then heated to 190°C. In this heating process, the deposition of a polyimide resin powder and dehydration associated with imidization were confirmed at a solution temperature of from 120 to 140°C. The solution was kept at 190°C for 30 minutes, then allowed to cool to room temperature, and filtered. The obtained polyimide resin powder was washed and filtered with 300 g of 2-(2-methoxyethoxy)ethanol and 300 g of methanol, and then dried in a dryer at 180°C for 10 hours to obtain 317 g of a powder of crystalline thermoplastic polyimide resin 1(hereinafter, also simply referred to as "polyimide resin 1").

The measurement of the IR spectrum of polyimide resin 1 showed the characteristic absorption of an imide ring ν(C=O) observed at 1768 and 1697 ($cm^{-1}$). The logarithmic viscosity was 1.30 dL/g, Tm was 323°C, Tg was 184°C, Tc was 266°C, the heat of melting was 21.0 mJ/mg, the heat of crystallization was 20.3 mJ/mg, the half-crystallization time was 20 seconds or less, and Mw was 55,000.

[Production Example 2]

Production of polyimide resin 2

769 g of 2-(2-methoxyethoxy)ethanol (produced by Nippon Nyukazai Co., Ltd.) and 174.50 g (0.80 mol) of pyromellitic dianhydride (produced by Mitsubishi Gas Chemical Company, Inc.) were introduced in a 2 L separable flask equipped with a Dean-Stark apparatus, a Liebig condenser tube, a thermocouple, and a four-paddle blade. After creation of a nitrogen flow, the mixture was agitated at 150 rpm so as to become a homogeneous suspended solution. On the other hand, 34.14 g (0.24 mol) of 1,3-bis(aminomethyl)cyclohexane (produced by Mitsubishi Gas Chemical Company, Inc., cis/trans ratio = 7/3) and 80.79 g (0.56 mol) of 1,8-octamethylenediamine (produced by Kanto Chemical Co., Inc.) were dissolved in 250 g of 2-(2-methoxyethoxy)ethanol with a 500 mL beaker, thereby preparing a mixed diamine solution. This mixed diamine solution was added gradually with a plunger pump. Heat was generated due to the drop addition, but the internal temperature was adjusted to be within the range of 40 to 80°C. The dropwise addition of the mixed diamine solution was carried out in a nitrogen flow state over the whole period. The number of rotations of the agitation blade was set to 200 rpm. After the completion of the dropwise addition, 10 g of 2-(2-methoxyethoxy)ethanol and 1.027 g (0.008 mol) of n-octylamine (produced by Kanto Chemical Co., Inc.) as an end capping agent were added thereto, and the mixture was further agitated. At this stage, a pale yellow polyamic acid solution was obtained. Next, the agitation speed was set to 250 rpm, and the polyamic acid solution in the 2 L separable flask was then heated to 185°C. In this heating process, the deposition of a polyimide resin powder and dehydration associated with imidization were confirmed at a solution temperature of from 120 to 140°C. The solution was kept at 185°C for 30 minutes, then allowed to cool to room temperature, and filtered. The obtained polyimide resin powder was washed with 600 g of methanol, filtered, and then dried at 185°C for 10 hours with a drier, thereby providing 256 g of a powder of crystalline thermoplastic polyimide resin 2 (hereinafter, simply referred to as "polyimide resin 2").

The polyimide resin 2 had a Tm of 330°C, a Tg of 179°C, a Tc of 278°C, a heat of melting of 34 mJ/mg, a heat of crystallization of 32 mJ/mg, and a Mw of 37,000.

[Production Example 3]

Production of polyimide resin 3

769 g of 2-(2-methoxyethoxy)ethanol (produced by Nippon Nyukazai Co., Ltd.) and 174.50 g (0.80 mol) of pyromellitic dianhydride (produced by Mitsubishi Gas Chemical Company, Inc.) were introduced in a 2 L separable flask equipped with a Dean-Stark apparatus, a Liebig condenser tube, a thermocouple, and a four-paddle blade. After creation of a nitrogen flow, the mixture was agitated at 150 rpm so as to become a homogeneous suspended solution. On the other hand, 22.76 g (0.16 mol) of 1,3-bis(aminomethyl)cyclohexane (produced by Mitsubishi Gas Chemical Company, Inc., cis/trans ratio = 7/3) and 92.33 g (0.64 mol) of 1,8-octamethylenediamine (produced by Kanto Chemical Co., Inc.) were dissolved in 250 g of 2-(2-methoxyethoxy)ethanol with a 500 mL beaker, thereby preparing a mixed diamine solution. This

mixed diamine solution was added gradually with a plunger pump. Heat was generated due to the drop addition, but the internal temperature was adjusted to be within the range of 40 to 80°C. The dropwise addition of the mixed diamine solution was carried out in a nitrogen flow state over the whole period. The number of rotations of the agitation blade was set to 250 rpm. After the completion of the dropwise addition, 10 g of 2-(2-methoxyethoxy)ethanol and 1.027 g (0.008 mol) of n-octylamine (produced by Kanto Chemical Co., Inc.) as an end capping agent were added thereto, and the mixture was further agitated. At this stage, a pale yellow polyamic acid solution was obtained. Next, the agitation speed was set to 200 rpm, and the polyamic acid solution in the 2 L separable flask was then heated to 185°C. In this heating process, the deposition of a polyimide resin powder and dehydration associated with imidization were confirmed at a solution temperature of from 120 to 140°C. The solution was kept at 185°C for 30 minutes, then allowed to cool to room temperature, and filtered. The obtained polyimide resin powder was washed with 600 g of methanol, filtered, and then dried at 185°C for 10 hours with a drier, thereby providing 256 g of a powder of crystalline thermoplastic polyimide resin 3 (hereinafter, simply referred to as "polyimide resin 3").

The measurement of the IR spectrum of polyimide resin 3 showed that Tm was 344°C, Tg was 166°C, Tc was 299°C, the heat of melting was 40 mJ/mg, the heat of crystallization was 35 mJ/mg, and Mw was 36,000.

[Production Example 4]

Production of polyimide resin 4

650 g of 2-(2-methoxyethoxy)ethanol (produced by Nippon Nyukazai Co., Ltd.) and 257.75 g (1.180 mol) of pyromellitic dianhydride (produced by Mitsubishi Gas Chemical Company, Inc.) were introduced in a 2 L separable flask equipped with a Dean-Stark apparatus, a Liebig condenser tube, a thermocouple, and a four-paddle blade. After creation of a nitrogen flow, the mixture was agitated at 150 rpm so as to become a homogeneous suspended solution. On the other hand, 83.96 g (0.5902 mol) of 1,3-bis(aminomethyl)cyclohexane (produced by Mitsubishi Gas Chemical Company, Inc., cis/trans ratio = 7/3), 54.86 g (0.4722 mol) of 1,6-hexamethylenediamine (produced by FUJIFILM Wako Pure Chemical Corporation), and 23.64 g (0.1180 mol) of 4,4'-diaminodipheny] ether (produced by Wakayama Seika Kogyo Co., Ltd.) were dissolved in 250 g of 2-(2-methoxyethoxy)ethanol with a 500 mL beaker, thereby preparing a mixed diamine solution. This mixed diamine solution was added gradually with a plunger pump. Heat was generated due to the drop addition, but the internal temperature was adjusted to be within the range of 40 to 80°C. The dropwise addition of the mixed diamine solution was carried out in a nitrogen flow state over the whole period. The number of rotations of the agitation blade was set to 250 rpm. After the completion of the dropwise addition, 100 g of 2-(2-methoxyethoxy)ethanol and 2.270 g (0.0176 mol) of n-octylamine (produced by Kanto Chemical Co., Inc.) as an end capping agent were added thereto, and the mixture was further agitated. At this stage, a transparent yellow homogenous polyamic acid solution was obtained. Next, the agitation speed was set to 200 rpm, and the polyamic acid solution in the 2 L separable flask was then heated to 190°C. In this heating process, the deposition of a polyimide resin powder and dehydration associated with imidization were confirmed at a solution temperature of from 130 to 150°C. The solution was kept at 190°C for 30 minutes, then allowed to cool to room temperature, and filtered. The obtained polyimide resin powder was washed with 300 g of 2-(2-methoxyethoxy)ethanol and 300 g of methanol, filtered, and then dried at 190°C for 10 hours with a drier, thereby providing 360 g of a powder of polyimide resin 4.

The measurement of the IR spectrum of polyimide resin 4 showed the characteristic absorption of an imide ring ν(C=O) observed at 1771 and 1699 ($cm^{-1}$). The logarithmic viscosity was 0.63 dL/g, Tm was 337°C, Tg was 233°C, Tc was 283°C, the heat of melting was 20 mJ/mg, the heat of crystallization was 24 mJ/mg, the half-crystallization time was 20 seconds or less, and Mw was 30,000.

The composition and evaluation results of the polyimide resin (A) in Production Examples 1 to 4 are shown in Table 1. The values expressed in mol% of the tetracarboxylic acid component and the diamine component in Table 1 are values calculated from the charged amount of each component in production of the polyimide resin.

Table 1

| | | Tetracarboxylic acid component (mol% in total tetracarboxyl ic acid component) | Diamine component (mol% in total diamine component) | | | | (1)/{(1)+(2)} (mol%)*1 | End capping agent (molar amount with respect to 1 mole of tetracarboxylic acid component) | | Tm (°C) | Tg (°C) | Tc (°C) | Heat of melting Hm (mJ/mg) | Heat of crystallization He (mJ/mg) | Half-crystallization time (see) | Mw |
|---|---|---|---|---|---|---|---|---|---|---|---|---|---|---|---|---|
| | | PMDA | 1,3-BAC | OMDA | HMDA | ODA | | n-OcA | BzA | | | | | | | |
| Production Example 1 | Polyimide resin 1 | 100 | 35 | 65 | | | 35 | 0.01 | | 323 | 184 | 266 | 21.0 | 20.3 | <20 | 55,000 |
| Production Example 2 | Polyimide resin 2 | 100 | 30 | 70 | | | 30 | 0.01 | | 330 | 179 | 278 | 34 | 32 | not measured | 37,000 |
| Production Example 3 | Polyimide resin 3 | 100 | 20 | 80 | | | 20 | 0.01 | | 344 | 166 | 299 | 40 | 35 | not measured | 36,000 |
| Production Example 4 | Polyimide resin 4 | 100 | 50 | | 40 | 10 | 55.6 | | 0.015 | 337 | 233 | 283 | 20 | 24 | <20 | 30,000 |

*1: Content ratio (mol%) of the repeating structural unit of the formula (1) with respect to the total of the repeating structural unit of the formula (1) and the repeating structural unit of the formula (2) in the polyimide resin

The abbreviations in the table 1 are as follows.

- PMDA; pyromellitic dianhydride
- 1,3-BAC; 1,3-bis(aminomethyl)cyclohexane
- OMDA; 1,8-octamethylenediamine
- HMDA: 1,6-Hexamethylene diamine
- ODA: 4,4'-Diaminodiphenyl ether
- n-OcA: n-Octylamine
- BzA: Benzylamine

Example 1

(Production and evaluation of thermophysical properties of thermoplastic resin composition and molded article)

A powder of the polyimide resin 1 obtained in Production Example 1 and pellets of a polyether ketone ketone resin ("7002" produced by ARKEMA, T/1 ratio: 70/30, TmB = 330°C, Tg = 157°C) as component (B) were dry-blended in the ratio shown in Table 2, and the obtained mixture was then melt-kneaded and extruded using a co-rotating twin screw extruder ("HK-25D", produced by Parker Corporation, screw diameter: 25 mm, L/D = 41) at a barrel temperature of 370°C and a screw rotation speed of 150 rpm. A strand extruded from the extruder was cooled in air and then pelletized with a pelletizer ("Fan Cutter FC-Mini-4/N" produced by Hoshi Plastics Co., Ltd.). The obtained pellets were dried at 150°C for 12 hours, and then used for injection molding.

The injection molding was performed at a barrel temperature of 360°C, a mold temperature of 200°C, and a molding cycle of 207 seconds using an injection-molding machine ("ROBOSHOT α-S1 30iA" produced by Fanuc Corporation), and an injection-molded article having a predetermined shape to be used in the above-described evaluation (HDT measurement) was produced.

Using the obtained pellets or injection-molded articles, various evaluations were performed based on the methods described above. The results are shown in Table 2.

Example 2

Pellets and an injection-molded article were produced and the various evaluations were performed in the same manner as in Example 1, except that the powder of the polyimide resin 1 obtained in Production Example 1 and the pellets of the polyether ketone ketone resin were used in the proportion shown in Table 2, and the injection molding was performed at a molding cycle of 244 seconds. The results are shown in Table 2.

Example 3

Pellets and an injection-molded article were produced and the various evaluations were performed in the same manner as in Example 1, except that the powder of the polyimide resin 1 obtained in Production Example 1 and the pellets of the polyether ketone ketone resin were used in the proportion shown in Table 2, and the injection molding was performed at a molding cycle of 224 seconds. The results are shown in Table 2.

Example 4

Pellets and an injection-molded article were produced and the various evaluations were performed in the same manner as in Example 1, except that the powder of the polyimide resin 1 obtained in Production Example 1 and the pellets of the polyether ketone ketone resin were used in the proportion shown in Table 2, and the injection molding was performed at a molding cycle of 374 seconds. The results are shown in Table 2.

Comparative Example 1

A powder of the polyimide resin 1 obtained in Production Example 1 was melt-kneaded and extruded at a barrel temperature of 360°C and a screw rotation speed of 150 rpm using a Labo Plasto Mill (produced by Toyo Seiki Seisaku-Sho, Ltd.). The strand extruded from the extruder was air cooled, and then pelletized with a pelletizer ("Fan Cutter FC-Mini-4/N", produced by Hoshi Plastic Co., Ltd.). The obtained pellets were dried at 150°C for 12 hours, and then used for injection-molding.

The injection molding was performed at a barrel temperature of 350°C, a mold temperature of 200°C, and a molding cycle of 50 seconds using an injection-molding machine ("ROBOSHOT α-S30iA" produced by Fanuc Corporation), and an injection-molded article having a predetermined shape to be used in the above-described evaluation (HDT measurement) was produced.

Various evaluations were performed by the methods described above using the obtained pellets or injection molded article. The results are shown in Table 2.

Comparative Example 2

Pellets of the polyether ketone ketone resin ("7002" produced by ARKEMA) were dried at 160°C for 6 hours and then used for injection molding.

The injection molding was performed at a barrel temperature of 360°C, a mold temperature of 200°C, and a molding cycle of 404 seconds using an injection-molding machine ("ROBOSHOT α-S130iA" produced by Fanuc Corporation), and an injection-molded article having a predetermined shape to be used in the above-described evaluation (HDT measurement) was produced.

Using the obtained pellets or injection-molded articles, various evaluations were performed based on the methods described above. The results are shown in Table 2.

Comparative Example 3

Pellets and an injection-molded article were produced and the various evaluations were performed in the same manner as in Example 4, except that instead of the polyether ketone ketone resin in Example 4 as the component (B), a polyether ether ketone resin (B') (PEEK, "PEEK 90G" produced by VICTREX, $Tm_B$ = 342°C, Tg = 154°C) was used. The results are shown in Table 2.

Comparative Example 4

The above-described polyether ether ketone resin ("PEEK 90G" produced by VICTREX) was melt-kneaded and extruded using a labo plasto mill (Toyo Seiki Seisaku-sho, Ltd.) at a barrel temperature of 350°C and a screw rotation speed of 150 rpm. The strand extruded from the extruder was air cooled, and then pelletized with a pelletizer ("Fan Cutter FC-Mini-4/N", produced by Hoshi Plastic Co., Ltd.). The obtained pellets were dried at 160°C for 6 hours, and then used for injection-molding.

Injection molding was performed at a barrel temperature of 350°C, a mold temperature of 195°C, and a molding cycle of 60 seconds using an injection-molding machine ("ROBOSHOT α-S30iA" produced by Fanuc Corporation), and an injection-molded article having a predetermined shape to be used in the above-described evaluation (HDT measurement) was produced.

Using the obtained pellets or injection-molded articles, various evaluations were performed based on the methods described above. The results are shown in Table 2.

Comparative Examples 5 to 7

Pellets were produced and the various evaluations were performed in the same manner as in Comparative Example 1, except that instead of the powder of the polyimide resin 1 used in Comparative Example 1, a powder of the polyimide resin shown in Table 2 was used.
The results are shown in Table 2.

Examples 5 to 7

Pellets were produced and the various evaluations were performed in the same manner as in Example 4, except that instead of the powder of the polyimide resin 1 used in Example 4, a powder of the polyimide resin shown in Table 2 was used. The results are shown in Table 2.

Table 2

| | | | Unit | Comparative Example | Example | Example | Example | Example | Comparative Example | Comparative Example | Comparative Example | Comparative Example | Example | Comparative Example | Example | Comparative Example | Example |
|---|---|---|---|---|---|---|---|---|---|---|---|---|---|---|---|---|---|
| | | | | 1 | 1 | 2 | 3 | 4 | 2 | 3 | 4 | 5 | 5 | 6 | 6 | 7 | 7 |
| Composition | (A) | Polyimide resin 1 ($Tm_A$=323°C) | % by mass | 100 | 70 | 50 | 30 | 10 | | 10 | | | | | | | |
| | | Polyimide resin 2 ($Tm_A$ = 330°C) | % by mass | | | | | | | | | 100 | 10 | | | | |
| | | Polyimide resin 3 ($Tm_A$ = 344°C) | % by mass | | | | | | | | | | | 100 | 10 | | |
| | | Polyimide resin 4 ($Tm_A$ =337°C) | % by mass | | | | | | | | | | | | | 100 | 10 |
| | (B) | PEKK ($Tm_B$ = 330°C) | % by mass | | 30 | 50 | 70 | 90 | 100 | | | | 90 | | 90 | | 90 |
| | (B') | PEEK ($Tm_B$ = 342°C) | % by mass | | | | | | | 90 | 100 | | | | | | |
| $\|Tm_A-Tm_B\|$ | | | °C | – | 7 | 7 | 7 | 7 | – | 19 | – | – | 0 | – | 14 | – | 5 |
| Evaluation results | Thermophysical properties | Melting point (Tm) | °C | 323 | 323 | 323 | 333 | 334 | 330 | 345 | 343 | 330 | 335 | 344 | 335 | 337 | 335 |
| | | Glass transition temperature (Tg) | °C | 185 | 161 | 159 | 159 | 160 | 157 | 152 | 154 | 179 | 160 | 166 | 160 | 233 | 160 |
| | | Crystallization temperature (Tc) *The temperature of the weaker peak is shown in parentheses | °C | 270 (234) | 287,268 (227) | 284,261 (216) | 225 (278) | 241 | 269 | 297 | 291 | 278 | 250 | 299 | 253 | 283 | 248 |
| | | Heat of melting (Hm) | mJ/mg | 21.0 | 21 | 25 | 29 | 32 | 31 | 40 | 37 | 34 | 32 | 40 | 32 | 20 | 34 |
| | | Heat of crystallization (Hc) | mJ/mg | 20.3 | 19 | 24 | 28 | 31 | 36 | 34 | 32 | 32 | 33 | 35 | 33 | 24 | 33 |
| | | HDT load 1.8 MPa | °C | 170 | 155 | 155 | 158 | 159 | 157 | 164 | 157 | | | | | | |
| | | $Tm-Tc_{MIN}$ | °C | 89 | 96 | 107 | 108 | 93 | 61 | 48 | 52 | 52 | 85 | 45 | 82 | 54 | 87 |

The details of each component shown in Table 2 are as follows.

<Crystalline thermoplastic polyimide resin (A)>

- Polyimide resins 1 to 4: Crystalline thermoplastic polyimide resins 1 to 4 obtained in Production Examples 1 to 4

<Polyether ketone ketone resin (B)>

- "7002" produced by ARKEMA, T/I ratio: 70/30, $Tm_B$ = 330°C, Tg = 157°C

<Polyetheretherketone resin (B')>

- "PEEK 90G" produced by VICTREX, $Tm_B$ = 342°C, Tg = 154°C

As shown in Table 2, it can be seen that the minimum crystallization temperature $Tc_{MIN}$ of the thermoplastic resin compositions of the Examples (Examples 1 to 7) is lower than the crystallization temperature Tc of the component (A) or component (B), which are the resin raw materials, alone. In addition, the thermoplastic resin compositions of the Examples all have a heat of crystallization He of 10 mJ/mg or more, and maintained sufficient crystallinity.
Further, the ($Tm-Tc_{MIN}$) value of the thermoplastic resin compositions of the Examples is higher than the value of the component (A) or component (B), which are the resin raw materials, alone, and it is thought that those composition have physical properties more suitable for thermoforming.
Further, the morphology of the pellets and injection-molded article obtained in Example 3 was confirmed by the following method.
The pellets obtained in Example 3 were cut using an ultramicrotome ("EM UC7" produced by Leica Microsystems) in a direction perpendicular to the machine direction (MD) of the pellets (i.e., so that a TD cross-section was visible) as shown in Fig. 1 to produce an ultra-thin section. In Fig. 1, reference numeral 1 denotes a pellet and reference numeral 2 denotes an ultra-thin section.
The section was stained in the gas phase of ruthenium tetroxide for 30 minutes, and then subjected to transmission observation using a STEM detector at an acceleration voltage of 30 kV and an observation magnification of 30,000 times using a field emission scanning transmission electron microscope (FE-STEM, "Gemini SEM500" produced by ZEISS) (Fig. 2).
Further, the injection-molded article obtained in Example 3 was cut using a diamond wheel saw ("MODEL 650" produced by SOUTHBAY TECHNOLOGY) in a direction perpendicular to the machine direction (MD) of a test section of a multi-purpose test piece of the injection-molded article (i.e., so that a TD cross-section was visible), and the central portion of the test section was cut out. An ultra-thin section was produced from near the center of the cut cross-section using an ultramicrotome in the same manner as for the pellets. The section was stained in the gas phase of ruthenium tetroxide for 30 minutes, and then subjected to transmission observation at an acceleration voltage of 30 kV and an observation magnification of 30,000 times using a field emission scanning transmission electron microscope (FE-STEM, "Gemini SEM500" produced by ZEISS) (Fig. 3).
From Fig. 2 and Fig. 3, it can be seen that in the pellets and injection-molded article obtained in Example 3, the crystalline thermoplastic polyimide resin (A) and the polyether ketone ketone resin (B) formed a lamellar microphase-separated structure.

Example 8 (Production and evaluation of film, and evaluation of adhesion between the film and copper foil)

<Production of film>

Pellets of the thermoplastic resin composition obtained in Example 3 were dried at 150°C for 10 hours, charged into a 20 mm single-screw extrusion molding machine equipped with a 150 mm wide T die, and the pellets were melt-kneaded at a resin temperature of 350 to 360°C. The melt-kneaded thermoplastic resin composition was continuously extruded from the T-die of the single-screw extrusion molding machine, and then cooled with a metal roll, which was a cooling roll at 140°C, to obtain a film having a thickness of 50 μm.

Here, the temperature of the 20 mm single screw extrusion molding machine was set to 335 to 340°C, and the temperature of the T die was set to 335°C.

<Total light transmittance>

The total light transmittance (%) of the film was measured in accordance with JIS K7361-1:1997 using a simultaneous color and turbidity meter ("COH400" produced by Nippon Denshoku Industries Co., Ltd.).

<Haze>

The haze (%) of the film was measured in accordance with JIS K7136:2000 using a simultaneous color and turbidity meter ("COH400" produced by Nippon Denshoku Industries Co., Ltd.).

<YI>

The YI value of the film was measured in accordance with JIS K7373:2006 using a simultaneous color and turbidity meter ("COH400" produced by Nippon Denshoku Industries Co., Ltd.).

<Hue (Lab)>

The L, a, and b values of the film were measured in accordance with JIS 28781-4:2013 using a color difference meter ("ZE2000" produced by Nippon Denshoku Industries Co., Ltd.) by a reflection method.

<Dielectric constant, dissipation factor>

The dielectric constant and the dissipation factor of the film were measured in accordance with IEC 62810 using a "PNA-L. Network Analyzer N5230A" produced by Agilent Technologies, Inc. and a cavity resonator "CP531" produced by Kanto Electronics Application & Development Inc. by a cavity resonator perturbation method at a temperature of 23°C, a humidity of 50%, and a measurement frequency of 10 GHz. The measured value was the average value of n = 2. The film was dried in a desiccator, and then quickly used for measurement.

<Adhesion between films>

Two 10 cm × 10 cm films 3a and 3b produced by the above method were prepared, and placed on release paper (material: PTFE) as shown in Fig. 4(a) so that there was 1 cm overlap between the two films (in Fig. 4(a) d = 1 cm). Another sheet of release paper was placed on top of the films, which were then heat-sealed using a thermal gradient tester (produced by Toyo Seiki Seisaku-sho, Ltd., heater: upper side). The heat sealing conditions were a temperature of 250°C and a pressure of 0.4 MPa (gauge pressure) for 60 seconds.

After the heat-sealing, the sheets of release paper were removed, and the films were cut in the MD direction shown in Fig. 4(a) to produce a strip-shaped test piece having a width of 1 cm (Fig. 4(b)). The adhesion area between the films 3a' and 3b' in Fig. 4(b) was 1 $cm^2$

Next, one of the short sides of the obtained test piece was picked up and hung so that the long side was parallel to the direction of gravity as shown in Fig 5, and if the film on the lower side did not fall within 30 seconds, the test piece was determined to exhibit adhesion.

<Adhesion between film and copper foil>

A 10 cm × 10 cm film 3a produced by the above method and a 10 cm × 10 cm × 12 μm in thickness copper foil 4 (rolled copper foil, JX Advanced Metals Corporation "BHM-102F-HA-V2") were prepared, and placed in order of the copper foil 4 and the film 3a on release paper (material: PTFE) as shown in Fig. 6(a) so that there was 1 cm overlap between them (in Fig. 6(a) d = 1 cm). Another sheet of release paper was placed on top of the films, which were then heat-sealed using a thermal gradient tester (produced by Toyo Seiki Seisaku-sho, Ltd., heater: upper side). The heat sealing conditions were a temperature of 250°C and a pressure of 0.4 MPa (gauge pressure) for 60 seconds.

After the heat-sealing, the sheets of release paper were removed, and the films were cut in the MD direction shown in Fig. 6(a) to produce a strip-shaped test piece having a width of 1 cm (Fig. 6(b)). The adhesion area between the film 3a' and the copper foil 4' in Fig. 6(b) was 1 $cm^2$.

Next, the short side of the film 3a' of the obtained test piece was picked up and hung so that the long side was parallel to the direction of gravity as shown in Fig 7, and if the copper foil 4' on the lower side did not fall within 30 seconds,

the test piece was determined to exhibit adhesion.

<Tensile adhesive strength>

A test piece was produced in the same manner as in the evaluation of "adhesion to copper foil" and used for evaluation. The test piece was placed in the grip of a universal testing machine ("Strograph VG" manufactured by Toyo Seiki Seisaku-sho Co., Ltd.) so that the upper side was the film and the lower side was the copper foil, with the long side parallel to the direction of gravity (Fig. 7). A tensile shear test was conducted in accordance with JIS K 6849-1994 at a temperature of 23°C, a test range of 200 N, and a test speed of 5 mm/min to determine the tensile adhesive strength ($N/cm^2$).

Example 9 and Comparative Examples 8 to 10

A film was produced and evaluated in the same manner as in Example 8, except that the thermoplastic resin composition used for producing the film was changed to the thermoplastic resin or thermoplastic resin composition listed in Table 3. The results are shown in Table 3.

Table 3

| | | | Unit | Comparative Example 8 | Example 8 | Example 9 | Comparative Example 9 | Comparative Example 10 |
|---|---|---|---|---|---|---|---|---|
| Composition | (A) | Polyimide resin 1 ($Tm_A$ = 323°C) | % by mass | 0 | 30 | 70 | 100 | 0 |
| | (B) | PEKK ($Tm_B$ = 330°C) | % by mass | 100 | 70 | 30 | 0 | 0 |
| | (B') | PEEK ($Tm_B$ = 342°C) | % by mass | 0 | 0 | 0 | 0 | 100 |
| Film thickness | | | μm | 50 | 50 | 50 | 50 | 50 |
| Evaluation results | Optical characteristics | Total light transmittance | % | 86.8 | 86.4 | 84.8 | 86.7 | - |
| | | Haze | % | 2.1 | 2.2 | 6.0 | 2.1 | - |
| | | YI | – | 4.9 | 9.4 | 16 | 9.3 | - |
| | | L | – | 94.6 | 94.4 | 93.6 | 94.5 | - |
| | | a | – | -0.7 | -0.9 | -1.1 | -0.4 | - |
| | | b | – | 2.9 | 5.3 | 9.2 | 5.1 | - |
| | Dielectric properties | Dielectric constant @10 GHz | – | 3.3 | 3.0 | 2.9 | 2.7 | 3.2 |
| | | Dissipation factor @10 GHz | – | 0.006 | 0.006 | 0.006 | 0.004 | 0.004 |
| | Adhesion | Adhesion between films | – | yes | yes | yes | yes | - |
| | | Adhesion with copper foil | – | yes | yes | yes | yes | no |
| | | Tensile adhesive strength (film-copper foil)) | $N/cm^2$ | 14.6 | 14.9 | 14.5 | 14.5 | measurement not possible |

The details of each component shown in Table 3 are as follows.

<Crystalline thermoplastic polyimide resin (A)>

- Polyimide resin 1: Crystalline thermoplastic polyimide resin 1 obtained in Production Example 1

<Polyether ketone ketone resin (B)>

- "7002" produced by ARKEMA, T/I ratio: 70/30, $Tm_B$ = 330°C, Tg = 157°C

<Polyetheretherketone resin (B')>

- "PEEK 90G" produced by VICTREX, $Tm_B$ = 342°C, Tg = 154°C

From Table 3, it can be seen that, even when compared with a film composed of one type of thermoplastic resin, a film composed of the thermoplastic resin composition of the present invention does not suffer from a significant decrease in total light transmittance or from an extreme increase in haze, YI, or the like, and that it is transparent. Moreover, a film composed of the thermoplastic resin composition of the present invention exhibits low dielectric constant and low dissipation factor, and can ensure adhesion between films and between the film and a copper foil.

It is noted that, as shown in Comparative Example 10, a PEEK film has low adhesion to copper foil.

Industrial Applicability

The thermoplastic resin composition of the present invention has heat resistance and crystallinity, suppresses an increase in crystallization temperature, has good thermoformability, and is less likely to cause a decrease in adhesion or to cause sink marks during three-dimensional modeling, and thus is suitable as a molding material for 3D printers, for example. Further, the thermoplastic resin composition of the present invention exerts good adhesion to an adherend due to the effect of reducing the crystallization temperature and has high heat resistance, so the therrnoplastic resin composition is also suitable to use for a metal foil laminate such as a bonding sheet or a copper clad laminate.

Reference Signs List

| | |
|---|---|
| 1 | pellet |
| 2 | ultra-thin section |
| 3a, 3b, 3a', 3b' | film |
| 4,4' | copper foil |

**Claims**

**1.** A thermoplastic resin composition comprising a crystalline thermoplastic polyimide resin (A) and a polyether ketone ketone resin (B), the crystalline thermoplastic polyimide resin (A) comprising a repeating structural unit represented by the following formula (1) and a repeating structural unit represented by the following formula (2), a content ratio of the repeating structural unit of formula (1) with respect to the total of the repeating structural unit of formula (1) and the repeating structural unit of formula (2) being 15 to 70 mol%, wherein
an absolute value of a difference between a melting point $Tm_A$ of the component (A) and a melting point $Tm_B$ of the component (B), $|Tm_A-Tm_B|$, is 0 to 40°C,

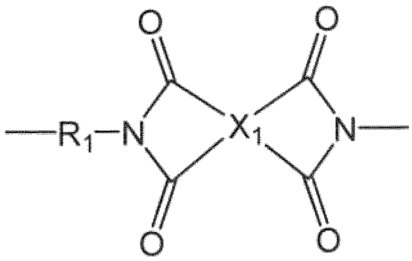

(1)

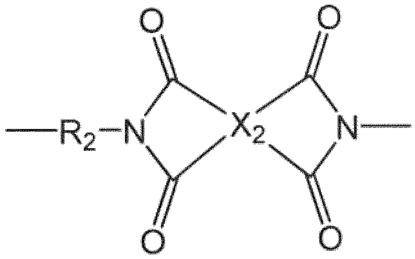

(2)

wherein $R_1$ represents a divalent group having from 6 to 22 carbon atoms containing at least one alicyclic hydrocarbon structure; $R_2$ represents a divalent chain aliphatic group having from 5 to 16 carbon atoms; and $X_1$ and $X_2$ each independently represent a tetravalent group having from 6 to 22 carbon atoms containing at least one aromatic ring.

**2.** The thermoplastic resin composition according to claim 1, wherein the melting point $Tm_A$ of the component (A) and the melting point $Tm_B$ of the component (B) are both in a range of 270 to 360°C.

**3.** The thermoplastic resin composition according to claim 1 or 2, wherein a mass ratio of the component (A) to the component (B) in the thermoplastic resin composition is 1/99 to 80/20.

**4.** The thermoplastic resin composition according to any one of claims 1 to 3, wherein a total content of the component (A) and the component (B) in the thermoplastic resin composition is 50% by mass or more.

**5.** The thermoplastic resin composition according to any one of claims 1 to 4, wherein the thermoplastic resin composition has a heat of crystallization of 10 mJ/mg or more.

**6.** The thermoplastic resin composition according to any one of claims 1 to 5, wherein the thermoplastic resin composition has a melting point Tm, and a difference (Tm-Tc) between the melting point Tm and a crystallization temperature Tc of the thermoplastic resin composition is 65°C or more.

**7.** The thermoplastic resin composition according to claim 6, wherein (Tm-Tc) is 80°C or more.

**8.** The thermoplastic resin composition according to any one of claims 1 to 7, wherein the thermoplastic resin composition has a lamellar microphase-separated structure.

**9.** The thermoplastic resin composition according to any one of claims 1 to 8, further comprising a filler.

**10.** A molded article comprising the thermoplastic resin composition according to any one of claims 1 to 9.

**11.** A metal foil laminate comprising a layer composed of the molded article according to claim 10 and a layer composed of a metal foil.

**12.** A bonding sheet comprising the thermoplastic resin composition according to any one of claims 1 to 9.

**13.** A filament comprising the thermoplastic resin composition according to any one of claims 1 to 9.

**14.** A three-dimensional fabrication material comprising the thermoplastic resin composition according to any one of claims 1 to 9.

[Fig. 1]

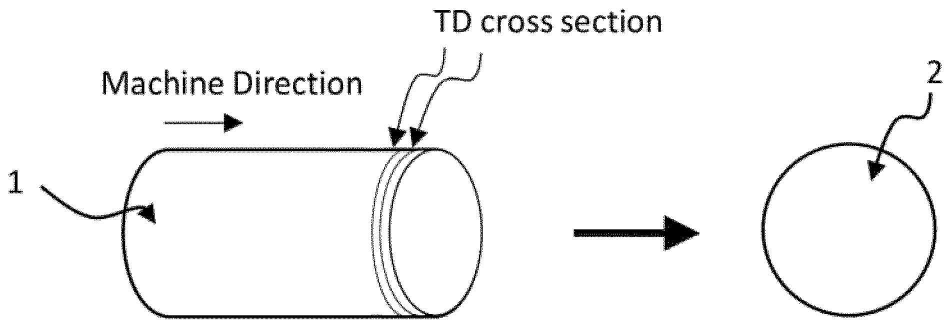


[Fig. 2]

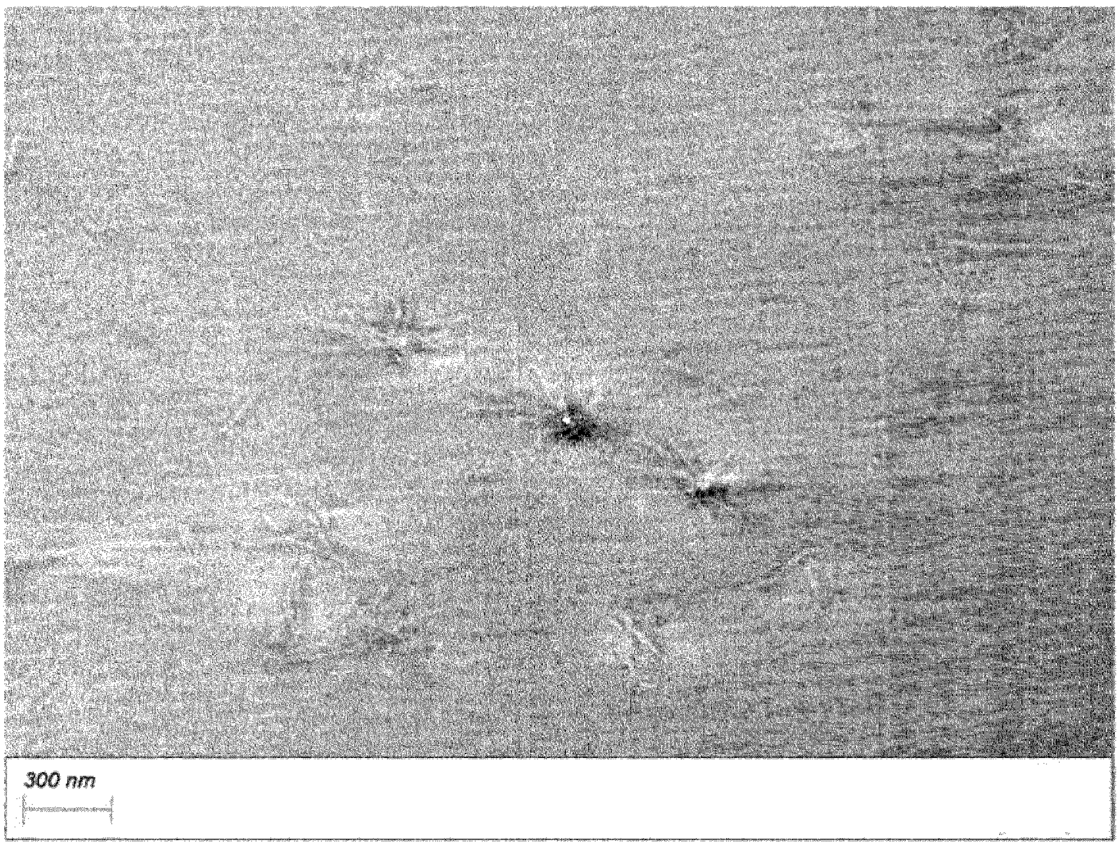

[Fig. 3]

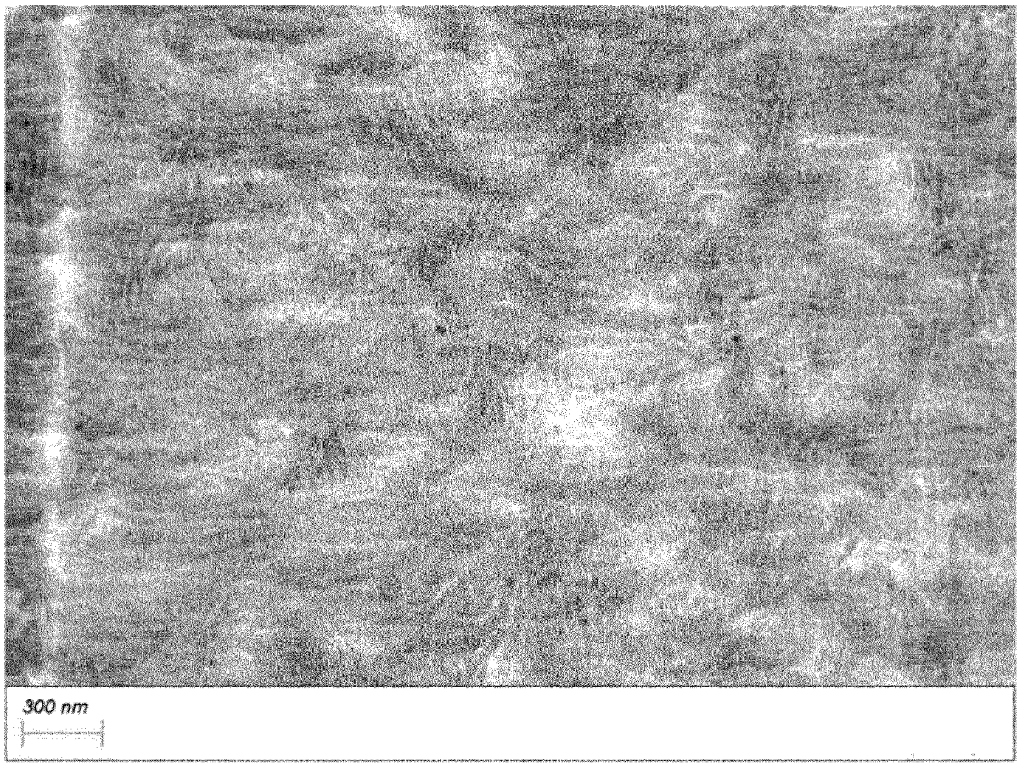


[Fig. 4]

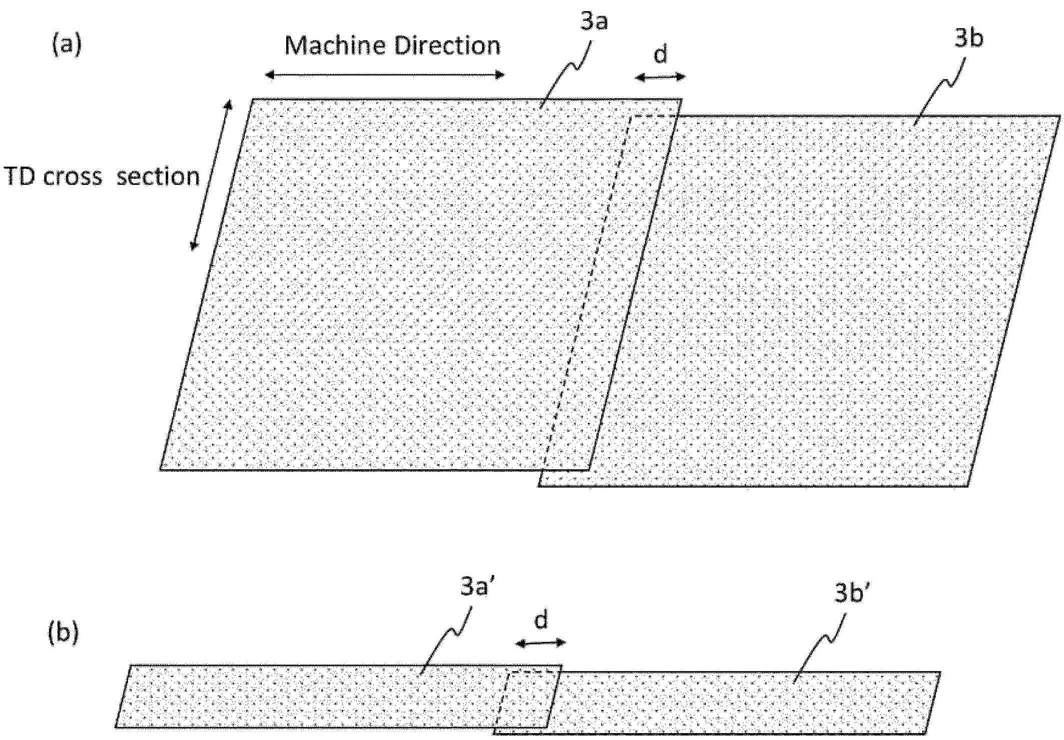

[Fig. 5]

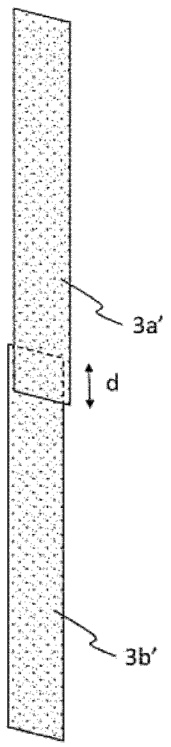


[Fig. 6]

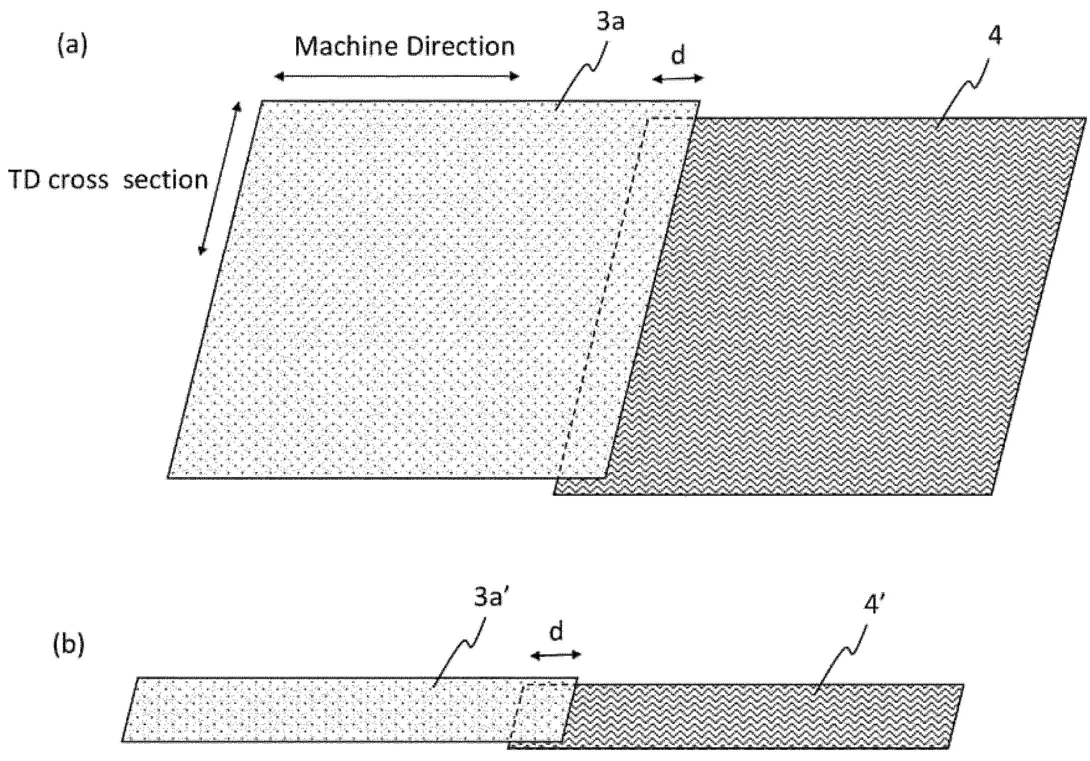

[Fig. 7]

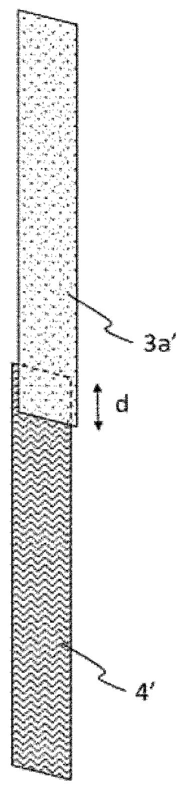

**INTERNATIONAL SEARCH REPORT**

International application No. **PCT/JP2023/018691**

**A. CLASSIFICATION OF SUBJECT MATTER**

***C08L 79/08***(2006.01)i; ***B32B 15/088***(2006.01)i; ***B33Y 70/00***(2020.01)i; ***C08G 73/10***(2006.01)i; ***C08L 101/00***(2006.01)i; ***C09J 7/35***(2018.01)i; ***C09J 171/00***(2006.01)i; ***C09J 179/04***(2006.01)i
FI: C08L79/08 B; B32B15/088; B33Y70/00; C08G73/10; C08L101/00; C09J7/35; C09J171/00; C09J179/04

According to International Patent Classification (IPC) or to both national classification and IPC

**B. FIELDS SEARCHED**

Minimum documentation searched (classification system followed by classification symbols)

C08L79/08; B32B15/088; B33Y70/00; C08G73/10; C08L101/00; C09J7/35; C09J171/00; C09J179/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2019/220969 A1 (MITSUBISHI GAS CHEMICAL COMPANY, INC) 21 November 2019 (2019-11-21)<br>claims, paragraphs [0014], [0033], [0054], [0062], [0065] | 1-7, 9-14<br>8 |
| A | WO 2016/147996 A1 (MITSUBISHI GAS CHEMICAL COMPANY, INC) 22 September 2016 (2016-09-22)<br>entire text | 1-14 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 June 2023** | **08 August 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/018691**

| Patent document cited in search report | Publication date (day/month/year) | Patent family member(s) | Publication date (day/month/year) |
|---|---|---|---|
| WO 2019/220969 A1 | 21 November 2019 | US 2021/0230370 A1<br>claims, paragraphs [0029], [0080], [0125], [0141], [0145]<br>EP 3795640 A1<br>CN 112105695 A<br>KR 10-2021-0013020 A<br>TW 201946972 A | |
| WO 2016/147996 A1 | 22 September 2016 | US 2017/0130003 A1<br>whole document<br>EP 3272785 A1<br>CN 106536598 A<br>KR 10-2017-0002690 A<br>TW 201638151 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013118704 A
- WO 2016147996 A
- WO 2019220969 A
- JP 2010221694 A


### Non-patent literature cited in the description


- ROBOSHOT $\alpha$-S1 30iA. Fanuc Corporation
- **FE-STEM**. Gemini SEM500. ZEISS
- Strograph VG. Toyo Seiki Seisaku-sho Co., Ltd